# EUROPÄISCHE PATENTSCHRIFT

(11) **EP 3 721 971 B1**
(45) Veröffentlichungstag und Bekanntmachung des Hinweises auf die Patenterteilung: **15.09.2021**
(21) Anmeldenummer: 19000281.6
(22) Anmeldetag: 11.06.2019
(51) Int. Cl.: B01D 53/26, B01J 20/08, B01J 20/10, B01J 20/16, C25B 1/04, C01B 3/58, C01B 13/02

(54) **VERFAHREN UND VORRICHTUNG ZUM TROCKNEN UND REINIGEN VON WASSERSTOFF ENTHALTENDEN GASEN**
METHOD AND DEVICE FOR DRYING AND CLEANING OF GASES CONTAINING HYDROGEN
PROCÉDÉ ET DISPOSITIF DE SÉCHAGE ET DE NETTOYAGE DES GAZ CONTENANT DE L'HYDROGÈNE

(30) Priorität: 09.04.2019 DE 202019001609 U
(43) Veröffentlichungstag der Anmeldung: 14.10.2020
(73) Patentinhaber: SILICA Verfahrenstechnik GmbH, 13509 Berlin (DE)
(72) Erfinder: Hartbrich, Andreas, 13467 Berlin (DE); Höhne, Gert, 13468 Berlin (DE); Jekow, Alexander, 17194 Blücherhof (DE)
(74) Vertreter: Hannig, Wolf-Dieter

(56) Entgegenhaltungen:
- DE-A1- 1 544 074
- JP-A- 2014 185 388
- KR-A- 20120 128 467
- US-A1- 2014 377 167

## Beschreibung

Die Erfindung betrifft ein Verfahren zum Trocknen und Reinigen von Wasserstoff enthaltenden Gasen, die bei der elektrolytischen Wasserspaltung mit elektrischem Strom in Form eines sauerstoffreichen Gases und eines wasserstoffreichen Gases anfallen, welche Reste des jeweils anderen Gases enthalten, bei dem das sauerstoffreiche Gas in die Atmosphäre oder an einen Verbraucher abgeführt, das wasserstoffreiche Gas in einem Erhitzer erwärmt und in einem Reaktor einer exothermen Reaktion unterworfen wird, in der der Restsauerstoff mit dem Wasserstoff zu Wasser in ein heißes feuchtes Prozessgas umgesetzt wird, sodann das Wasser aus diesem Prozessgas unter Überdruck durch Adsorption des Wassers an einem Adsorptionsmittel in einem von mindestens zwei durch Verbindungsleitungen und Schaltventilen verbundenen Adsorbern solange entfernt wird bis das Adsorptionsmittel im jeweiligen Adsorber mit Wasser beladen ist, wobei das getrocknete Prozessgas nach Verlassen des jeweiligen Adsorbers über einen Filter als hochreines Wasserstoff-Reingas in einer Reingasleitung zum Verbraucher abgeleitet und das unbehandelte Prozessgas zur Fortführung des Beladungsvorganges auf den unbeladenen Adsorber umgelenkt sowie gleichzeitig das beladene Adsorptionsmittel des jeweiligen Adsorbers mit einem entgegen der Stromrichtung des in der Beladung befindlichen Adsorbers durch eine in einer Regenerationsgasleitung zugeführte, auf Desorptionstemperatur erhitzte Teilmenge an Reingas als Regenerationsgas regeneriert wird, wobei eine Steuereinheit die Adsorber in Abhängigkeit der Adsorptionsmittelbeladung in die Adsorptionsphase und Regenerationsphase oder umgekehrt umschaltet und alle elektrischen Verbraucher aus der anliegenden elektrischen Stromversorgung über eine Stromleitung gespeist werden.

Die Erfindung betrifft ferner eine Vorrichtung zum Trocknen und Reinigen von Wasserstoff enthaltenden Gasen, die bei der elektrolytischen Wasserspaltung mit elektrischem Strom in Form eines sauerstoffreichen Gases und eines wasserstoffreichen Gases anfallen, welche Reste des jeweils anderen abgetrennten Gases enthalten, mit einer an die Einspeiseleitung angeschlossenen Stromleitung zur Versorgung aller Verbraucher der Vorrichtung mit Strom, einer Abführleitung für das sauerstoffreiche Gas in die Atmosphäre oder zum Verbraucher und einer Zuführleitung für das wasserstoffreiche Gas, mit einem Erhitzer zum Erwärmen des wasserstoffreichen Gases, einem Reaktor zur Umsetzung von Restsauerstoff und Wasserstoff unter Bildung von Wasser an einem Katalysator zu einem heißen Prozessgas, mindestens zwei mit Adsorptionsmittel befüllte Adsorber, die über Verbindungsleitungen und Schaltventile bei Überdruck in den Adsorptions- und Regenerationszustand und umgekehrt über eine Steuereinheit umschaltbar angeordnet sind und die zwei voneinander unabhängige Adsorptionskreise bilden, wobei die Adsorber mit dem Reaktor über eine Prozessgasleitung in Verbindung stehen, die das Prozessgas in die Adsorber zur Adsorption des Wassers leitet, und die Adsorber über einen Filter und eine kopfseitige, mit einem Schaltventil absperrbare Reingasleitung zur Ableitung des getrockneten Prozessgases als hochreines Reingas verbunden sind, und die Adsorber kopfseitig mit einer von der Reingasleitung nach dem Filter abzweigenden Regenerationsgasleitung zum Zuführen einer Teilmenge des Reingases als Regenerationsgas und fußseitig mit einer Desorptionsgasleitung zum Ableiten des mit Wasser beladenen Desorptionsgases entgegen der Stromrichtung des Prozessgases des auf Adsorption geschalteten Adsorbers verbunden sind.

### Stand der Technik

Die Elektrolyse zur Wasserstofferzeugung, d.h. die Wasserspaltung, gehört seit langem zum Stand der Technik. Bei diesem Verfahren wird Wasser mit elektrischem Strom in einem Elektrolyseur in seine Bestandteile Sauerstoff und Wasserstoff zerlegt.
Das erzeugte Wasserstoffgas wird anschließend einer Reinigung, beispielweise einer elektrischen Reinigung durch eine zweite Elektrolyseeinheit (DE 10 2015 201 802 A1) oder durch Adsorption (DE 10 2016 208 889 B4), unterzogen.
Für die Herstellung des Wasserstoffgases wird zunehmend elektrischer Strom aus erneuerbarer Primärenergie wie Solarenergie, Wind- oder Wasserkraft herangezogen. Solarenergie und Windkraft stehen witterungsbedingt nicht unterbrechungsfrei zur Verfügung bzw. können nur dann in ausreichendem Maße für die Elektrolyse genutzt werden, wenn der regenerativ erzeugte Strom nicht von anderen Verbrauchern im Netz abgenommen wird.
Der Nachteil dieses Standes der Technik besteht darin, dass der Elektrolyseur zur Wasserstofferzeugung abgeschaltet werden muss. Der nachgeschaltete adsorptive Trocknungsprozess des gewonnenen Wasserstoffgases im Adsorber muss demzufolge ebenso unterbrochen werden. Dies hat zur Folge, dass die Regeneration des nicht im Betrieb befindlichen Adsorbers abgebrochen werden muss, wodurch energetische Verluste entstehen. Darüber hinaus steht der nicht regenerierte Adsorber nach Wiederanschalten der Elektrolyse nicht für den adsorptiven Trocknungsprozess zur Verfügung und muss, sobald der regenerativ erzeugte Strom wieder zur Verfügung steht, zunächst regeneriert werden. In dieser Zeit kann der in der Elektrolyse erzeugte Wasserstoff nicht getrocknet werden. Die Elektrolyseanlage kann somit bis zum Abschluss der Regeneration nicht zur Wasserstofferzeugung genutzt werden.

Aus der DE 22 14 663 C2 ist eine Vorrichtung zur Adsorption von Wasserdampf aus feuchter Luft mit zwei, jeweils ein Molekularsieb enthaltenden Kammern bekannt, deren Zuleitungen und Ableitungen mit Ventilen zum intermittierenden Umsteuern der Kammern von Trocknung auf Regeneration und umgekehrt verbunden sind. Durch ein Gebläse wird ein Teilstrom der getrockneten Luft zur Regeneration des mit Wasser beladenen Adsorbers zurückgeführt.

Zum Stand der Technik gehört auch ein Verfahren zur Entfernung von Dampf aus einem zugeführten komprimierten Gas durch Einspeisen des Gases in eine mit Adsorbens für den Dampf gefüllte Kammer einer Anordnung von mindestens zwei Kammern, wobei jeweils die andere vorher zur Adsorption von Dampf aus dem Gas benutzt worden ist und nach einer gewissen Adsorptionszeit ein Vertauschen der Kammer stattfindet, um eine Reaktivierung der zuvor zur Adsorption benutzten Kammer und anschließenden Kühlung durch Frischluft vor erneuter Umschaltung vorzusehen, wobei während der Reaktionsperiode der jeweiligen Kammer durch ein im Druckbetrieb arbeitendes Gebläse ein heißer Gasstrom im Gegenstrom zur Adsorptionseinrichtung zugeführt wird (DE 37 20 915 C2). Am Ende der Reaktionsperiode wird ein Gebläse im Saugbetrieb eingeschaltet und der Kühlstrom als Saugstrom durch die Kammer in die Adsorptionsrichtung geführt. Als Gasstrom für den Druck- und Saugbetrieb wird Umgebungsluft eingesetzt und die einzelnen Kreise zur Reaktivierung und Adsorption werden durch Umschaltorgane gebildet. Der Kreis zur Reaktivierung weist eine Gebläseanordnung für Saug- und Druckbetrieb auf, wobei während des Druckbetriebes zusätzlich ein Erhitzer eingeschaltet ist.

Weiterhin ist aus der DE 42 03 634 A1 ein Verfahren zur Trennung von organischen Bestandteilen aus Gasgemischen bekannt, bei dem das zu trennende primäre Gasgemisch auf eine Membrantrennstufe geführt wird, in der das zu trennende Gasgemisch in ein mit organischen Verbindungen angereichertes Permeat, das dem primären Gasgemisch erneut zugeführt wird, und in ein mit organischen Verbindungen abgereichertes Retentat getrennt wird. Aus dem Retentat werden nachfolgend über einen Adsorptionsvorgang die organischen Verbindungen entfernt und der derart gereinigte Retentatgasstrom an die Umgebung abgegeben, wobei wenigstens ein Teil des gereinigten Retentatgases als Regeneriergas zur vakuumbetriebenen Desorption auf die beladene Adsorbereinrichtung geleitet wird. Das mit organischen Verbindungen angereicherte Regeneriergas wird dem primären Gasgemisch zugeführt.

Des Weiteren ist aus der DE 10 2008 057 763 A1 eine Vorrichtung zum adsorptiven Trennen eines Gases mit mindestens einem Adsorptionsbehälter bekannt, der mit einem Adsorbens befüllt ist, sowie mit Zu- und Ableitungen, über die in einer Adsorptionsphase des Adsorptionsbehälters der zu trennende Gasstrom zum Trennen durch das Adsorbens geleitet wird und über die in einer Regenerationsphase des Adsorptionsbehälters ein Teil des getrennten Gasstroms zur Regeneration des Adsorbens durch dieses geleitet wird. Der zu trennende Gasstrom wird vor dem Trennen mindestens durch einen Führungskanal entlang des Adsorbens geleitet, um dieses zu erwärmen.
Es handelt sich um die Trocknung von feuchter Druckluft. Die Abzweigung der getrockneten Druckluft erfolgt über ein Drosselelement.

Aus der DE 10 2012 112 040 B4 und der DE 10 2014 108 977 A1 sind Vorrichtungen zum Trocknen von Gasen, insbesondere zum Trocknen von Methan oder Erdgas bekannt, die einen Gaseinlass, einen Gasauslass, wenigstens zwei Adsorptionskammern zur Aufnahme von Trockenmittel, einen Kühler, der in Strömungsrichtung zwischen dem Gaseinlass und den Adsorptionskammern angeordnet ist, einen Kondensatauslass, der in Strömungsrichtung zwischen Gaseinlass und den Adsorptionskammern angeordnet ist, und einen Erhitzer aufweisen, wobei die Adsorptionskammern mit dem Gaseinlass und mit dem Gasauslass verbunden sind. Es ist ein Gebläse vorgesehen, das mit einer Ansaugleitung und einer Leitung zum Ansaugen von vorgekühltem und vorgetrocknetem Gas und mit einer Ansaugleitung und einer Leitung zum Ansaugen von trockenem Gas für Regeneration verbunden ist.

Eine andere bekannte Lösung (DE 20 2010 017 546 U1) sieht eine Vorrichtung zur adsorptiven Trocknung von gereinigtem Biogas (Biomethan) mit einem Methangehalt von mindestens 90 Vol.-% und Regenerierung beladener Adsorptionsmittel bestehend aus mindestens einem ersten Wärmetauscher zur Abkühlung und Reduzierung des Wassergehaltes im Biogas vor. Die Vorrichtung besitzt mindestens zwei Adsorber, wobei abwechselnd der eine Adsorber zur Trocknung von Biogas und der andere Adsorber zur Regeneration schaltbar ist, wobei die Adsorber mit einer Leitung zur Zuführung von abgekühltem Biogas und einer Leitung zur Abführung von getrocknetem Biogas verbunden sind. In die das Biogas abführende Leitung ist eine absperrbare Abzweigleitung zur Auskreisung eines Teilstromes an getrocknetem Biogas eingebunden, die mit mindestens zwei Wärmetauschern verbunden ist, wobei der eine Wärmetauscher zur Erwärmung und der andere Wärmetauscher zur Kühlung des getrockneten Biogases bestimmt ist. Das erwärmte oder gekühlte Biogas ist über eine weitere Leitung dem zu regenerierenden Adsorber zuführbar.

Die EP 2 544 794 B1 schlägt ein Verfahren zur adsorptiven Trocknung von gereinigtem Biogas (Biomethan) und Regenerierung beladener Adsorptionsmittel unter Verwendung von mindestens zwei Adsorbern vor, die feste Adsorptionsmittel als lose Schüttung enthalten, die abwechselnd beladen und mittels eines erwärmten Gasstromes regeneriert werden. Die Trocknung und die Regeneration werden als geschlossener Biogas-Kreislauf geführt, wobei als Adsorptionsmittel getrennte Schichten auf Basis Silica-Gel und Molekularsiebe eingesetzt werden und das zu trocknende Biogas zuerst die Silica-Gelschicht durchströmt.
Zur Regenerierung wird ausschließlich erwärmtes getrocknetes Biomethan mit einer Temperatur von bis zu 150 °C eingesetzt, das nach dem Kontakt mit dem Adsorptionsmittel wieder in den Ausgangsstrom an gereinigtem Biomethan zurückgeführt wird und nach erfolgter Regenerierung gekühltes, getrocknetes Biomethan mit dem Adsorptionsmittel in Kontakt gebracht wird, das anschließend in den Ausgangsstrom des gereinigten Biogases geführt wird, wobei während der Trocknung und Regenerierung anfallendes methanreiches Wasser wieder der Biogaserzeugung und/oder -reinigung zugeführt wird.

Außerdem ist aus der EP 2 628 520 A1 ein Verfahren zur Entfernung einer Komponente aus einem Ausgangsgas, beispielsweise Luft, mittels Adsorption bekannt, bei dem das Ausgangsgas über mindestens eine von mindestens zwei jeweils ein Adsorptionsmittel enthaltenden Kammern geführt wird, wobei mindestens eine der Kammern im Anschluss an einen in dieser Kammer durchgeführten Adsorptionsprozess reaktiviert wird. Zur Reaktivierung wird zunächst ein Desorptionsgas zur Regenerierung des darin enthaltenen Adsorptionsmittels durch die entsprechende Kammer und anschließend ein Kühlgas durch diese Kammer geführt, wobei der Desorptionsgasdurchfluss in gleicher Richtung zur Strömungsrichtung im Adsorptionsprozess erfolgt und der Desorptionsgasdurchfluss sowie Kühlgasdurchfluss mittels einer wechselstrombetriebenen Verdichtereinheit bewirkt werden. Die Leistung der Verdichtereinheit wird zumindest bei einem der Gasdurchflüsse über die Frequenz des Wechselstroms gesteuert und das Desorptionsgas vor Eintritt in die zugehörige Kammer mittels einer Heizeinrichtung erwärmt und die in Stromrichtung hinter der Heizeinrichtung gemessene Temperatur des Desorptionsgases über den Volumenstrom des Desorptionsgases geregelt, wobei die an der Verdichtereinheit anliegende Wechselstromfrequenz als Stellgröße verwendet wird.

Alle diese bekannten Lösungen können bei Fortfall der Elektroenergieversorgung den Nachteil eines abrupten Abbruches der Folgeprozesse nicht beseitigen.

### Aufgabenstellung

Bei diesem Stand der Technik liegt der Erfindung die Aufgabe zugrunde, die exotherme Reaktion von Wasser und Sauerstoff am Katalysator durch die Zugabe von Sauerstoff zu intensivieren und zugleich die Reaktionswärme der exothermen Reaktion zur Erhitzung des Regenerationsgases zu nutzen und diese in geeigneter Weise zu speichern, um die Regeneration zu jedem Zeitpunkt ordnungsgemäß zu beenden und den Gasfluss des in der Vorrichtung befindlichen Gases bei Abschaltung des Stroms oder eines Black-Outs durch eine interne/externe Stromquelle solange aufrechtzuerhalten bis die Regeneration des mit Wasser beladenen Adsorbers, bei gleichzeitiger Verbesserung der Wirtschaftlichkeit der Trocknung und Reinigung von Wasserstoff durch Reduzierung von Gasverlusten und Emissionen mittels der Rückführung einer Teilmenge des Reingases als Desorptionsgas in das Prozessgas, abgeschlossen ist.

Diese Aufgabe wird durch ein Verfahren mit den Merkmalen des Anspruches 1 und durch eine Vorrichtung mit den Merkmalen des Anspruchs 13 gelöst.

Vorteilhafte Ausgestaltungen des erfindungsgemäßen Verfahrens und der erfindungsgemäßen Vorrichtung sind den Unteransprüchen entnehmbar.

Die Lösung der Aufgabe wird dadurch erreicht, dass das zu trocknende und zu reinigende wasserstoffreiche Gas in eine dem Reaktor zugeführte Hauptmenge zum Erzeugen des Prozessgases und in eine Nebenmenge zum Erzeugen eines wasserstoffreichen Wärmeträgergases in einem Nebenreaktor aufgeteilt wird, wobei eine abgezweigte Teilmenge an sauerstoffreichem Gas vor Eintritt in den Nebenreaktor in die Nebenmenge zugeführt wird, die entstehende Reaktionswärme in einem Wärmespeicher gespeichert und das Wärmeträgergas im Wärmespeicher mindestens auf eine Temperatur oberhalb der Regenerationstemperatur erhitzt, anschließend einem Gas-Gas-Wärmetauscher zum Aufheizen des Regenerationsgases zugeführt und nach dem Wärmeaustausch in die Hauptmenge zurückgeführt wird, und dass ein an die Regenerationsgasleitung angeschlossener Gas-Booster mit Frequenzumrichter die Teilmenge des Reingases als Regenerationsgas ansaugt und ein Durchflusstransmitter mit integriertem Durchflussrechner den Volumendurchfluss der Teilmenge durch Ermitteln eines aktuellen Drehzahlwertes des Gas-Boosters als Ist-Wert oder eines Drehzahlwertes als Festwert über die Steuereinheit einstellt, die bei Fortfall der Stromversorgung ein Umschalten aller stromverbrauchenden Aggregate, wie Gas-Booster, Steuereinheit, Schaltventile, Regelventile und Pumpe auf eine interne/externe Stromquelle zur temporären Elektroenergieversorgung über die Stromleitung durch eine Schalteinrichtung auslöst, wobei der Gas-Booster einen Saugstrom-Kreislauf des bei Abschaltung der Stromversorgung vorhandenen, aus dem Restgas an den Adsorbern gebildeten Rein- und Desorptionsgases bis zum ordnungsgemäßen Abschluss der Regeneration auf einem durch die Gasleitungen, die Adsorber, den Gas-Booster, den Gas-Gas-Wärmetauscher, den Nebenreaktor/Wärmespeicher, den Reaktor, den Wärmetauscher, Abscheider und Filter führenden inneren Strömungsweg erzeugt, wobei das den auf Regeneration geschalteten Adsorber verlassende Desorptionsgas über den Nebenreaktor im Wärmespeicher erhitzt, dem Gas-Gas-Wärmetauscher als Wärmeträgergas zum Aufheizen des Regenerationsgases auf Desorptionstemperatur zugeführt und anschließend in das wasserstoffreiche Gas vor Eintritt in den Reaktor zurückgeführt wird.

Das erfindungsgemäße Verfahren umfasst nach einer bevorzugten Ausführungsform bei Vorhandensein der elektrischen Stromversorgung über die Wasserspaltung folgende Schritte:
a) Aufteilen des wasserstoffreichen Gases in die Hauptmenge, die dem Reaktor zum Erzeugen des Prozessgases über eine Hauptleitung zugeführt wird, und in eine Nebenmenge, die dem Nebenreaktor zum Erzeugen eines wasserstoffreichen Wärmeträgergases über eine Nebenleitung zugeführt wird,
b) Abzweigen der Teilmenge an sauerstoffreichem Gas und Zuführen dieser Teilmenge in die Nebenmenge gemäß Schritt a) vor Eintritt in den Nebenreaktor,
c) Einstellen der Temperatur des Wärmeträgergases durch Regeln der Zufuhr der Teilmenge an sauerstoffreichem Gas in die Teilmenge des wasserstoffreichen Gases,
d) Zuführen der Nebenmenge (T_{L}) des wasserstoffreichen Gases und der Teilmenge des sauerstoffreichen Gases in den Nebenreaktor zum Erzeugen des Wärmeträgergases, Speichern der Reaktionswärme im Wärmespeicher und Aufheizen des Wärmeträgergases auf eine Temperatur, die größer als die Regenerationstemperatur ist,
e) Weiterleiten des aufgeheizten Wärmeträgergases über eine Vorlaufleitung in den Gas-Gas-Wärmetauscher zum Durchführen eines Gas-Gas-Wärmetauschs zwecks Aufheizen des Regenerationsgases auf Desorptionstemperatur und Rückführen des wärmeentkoppelten Wärmeträgergases über eine Rücklaufleitung in die Hauptmenge des wasserstoffreichen Gases führende Hauptleitung,
f) Einstellen der Temperatur des Regenerationsgases durch Regeln der Zufuhr der Nebenmenge gemäß Schritt a) in den Nebenreaktor und den Wärmespeicher zum Erhitzen des Regenerationsgases auf Desorptionstemperatur,
g) Kühlen des heißen Prozessgases, Abscheiden des beim Kühlen auskondensierten Wassers und Abpumpen des Wassers in die Förderleitung zum Elektrolyseur oder in einen separaten Speicher oder Zwischenspeichern des Wassers im Abscheider mit nachfolgendem Abführen des Wassers,
h) Abzweigen der Teilmenge an Reingas als Regenerationsgas und Einstellen dieser Teilmenge durch Regeln des Volumendurchflusses an Regenerationsgas in die Adsorber,
i) Einleiten des erhitzten Regenerationsgases nach Schritt f) in den auf Regeneration geschalteten Adsorber zur Desorption des adsorbierten Wassers vom Adsorptionsmittel und
j) Rückführen des beladenen Desorptionsgases in das heiße Prozessgas vor dem Kühlen gemäß Schritt g) oder in das wasserstoffreiche Gas vor Eintritt in den Nebenreaktor.

In einer weiteren bevorzugten Ausführungsform des erfindungsgemäßen Verfahrens wird die Teilmenge an sauerstoffreichem Gas in Abhängigkeit einer von einem Temperatursensor in der Vorlaufleitung gemessenen Ist-Temperatur des Wärmeträgergases durch ein mit der Steuereinheit kommunizierendes Regelventil in einer Abzweigleitung auf eine Soll-Temperatur eingeregelt, die einer optimalen Wärmemenge für die Aufheizung des Regenerationsgases durch das Wärmeträgergas entspricht.

Eine weitere vorteilhafte Ausgestaltungsform des erfindungsgemäßen Verfahrens sieht vor, dass die Temperatur des Regenerationsgases in Abhängigkeit einer von einem Temperatursensor in der Regenerationsgasleitung in Stromrichtung hinter dem Gas-Gas-Wärmetauscher gemessenen Ist-Temperatur durch ein mit der Steuereinheit kommunizierendes Regelventil auf eine der Regenerationstemperatur entsprechende Soll-Temperatur eingeregelt wird, die einer ausreichenden Wärmemenge zum Erhitzen des Regenerationsgases auf Regenerationstemperatur entspricht.

Nach einem weiteren Merkmal des erfindungsgemäßen Verfahrens wird der Strömungsweg gebildet durch:
a) ein Absperren der Reingasleitung mit dem Schaltventil zum Verbraucher hin und ein Schließen der Hauptleitung mit dem Regelventil, der Abzweigleitung mit dem Regelventil und der Desorptionsgasleitung mit dem Schaltventil und
b) ein Offenhalten der Reingasleitung zur Regenerationsgasleitung, des durch die Schältventile über die Verbindungsleitungen auf Regeneration geschalteten Adsorbers, der über die Verbindungsleitung führenden Zuführleitung, der Nebenleitung über den Nebenreaktor/Wärmespeicher, der Vorlaufleitung über den Gas-Gas-Wärmetauscher, der Rücklaufleitung, der Hauptleitung über den Reaktor, der Prozessgasleitung und des durch die Schaltventile über die Verbindungsleitungen auf Adsorption geschalteten Adsorbers über die Reingasleitung zurück in die Regenerationsgasleitung.

Gemäß einer weiteren Ausgestaltung des erfindungsgemäßen Verfahrens ist von besonderem Vorteil, dass bei Wegfall der elektrischen Stromversorgung die verbliebene Menge an Restgas solange durch die Adsorber im Kreislauf gefahren wird, bis die Regeneration abgeschlossen ist, wobei die Fahrweise folgende Schritte umfasst:
I Einschalten der Stromversorgung durch die interne/ externe Stromquelle, beispielsweise einer Brennstoffzellen-Einheit, und Weiterbetrieb der elektrischen Verbraucher, wie Gas-Booster, Schalt- und Regelventile, Steuereinheit und Pumpe,
II Absperren der Reingasleitung zum Verbraucher hin durch das Schaltventil und Bilden des Strömungswegs,
III Weiterführen der Trocknung/Regeneration durch Fördern der von den Adsorbern aus dem verbliebenen Restgas erzeugten Rein- und Desorptionsgase mit dem Gas-Booster im Saugstrom-Kreislauf durch den Strömungsweg, wobei das Rein/Desorptionsgas bis zum Abschluss der Regeneration im Kreislauf umgewälzt und beim Passieren des Wärmespeichers auf eine Temperatur oberhalb der Regenerationstemperatur erhitzt wird,
IV Abzweigen einer Teilmenge an Gas aus der Reingasleitung als Regenerationsgas und Einstellen dieser Teilmenge durch Messen ihres Volumendurchflusses, Ermitteln eines aktuellen Drehzahlwertes des Gas-Boosters als Ist-Wert oder einen Drehzahlwert als Fest-Wert aus dem gemessenen Volumendurchfluss mit dem in den Durchflusstransmitter integrierten Durchflussrechner, Übermitteln des ermittelten Wertes an die Steuereinheit, die diesen Wert als Steuergröße dem Frequenzumrichter vorgibt,
V Aufheizen der Menge an Regenerationsgas durch das im Wärmespeicher erhitzte Wärmeträgergas (auf Desorptionstemperatur im Gas-Gas Wärmetauscher,
VI Einleiten des erhitzten Regenerationsgases in den jeweils auf Regeneration geschalteten Adsorber zur Desorption des adsorbierten Wassers vom Adsorptionsmittel und Rückführen des beladenen Desorptionsgases über das geöffnete Schaltventil in die Nebenleitung vor dem Nebenreaktor,
VII Aufheizen des rückgeführten Desorptionsgases im Wärmespeicher, Zuführen des erhitzten Desorptionsgases als Wärmeträgergas zum Gas-Gas-Wärmetauscher und Rückführen des Gases aus dem Gas-Gas-Wärmetauscher über die Rücklaufleitung in Stromrichtung der Hauptmenge des Gases nach dem Regelventil in die Hauptleitung zum Reaktor,
VIII Kühlen der rückgeführten Menge an Gas in den in Stromrichtung des Gases in die Prozessgasleitung eingebundenen Wärmetauscher, Abscheiden des auskondensierten Wassers im Abscheider und Abführen des Wassers durch Abpumpen in die Förderleitung zum Elektrolyseur oder in einen separaten Speicher oder Zwischenspeichern des Wassers im Abscheider mit nachfolgendem Abführen des Wassers,
IX Zuführen der den Abscheider verlassenden Menge an Gas zur Adsorption des noch vorhandenen Wassers in dem auf Adsorption geschalteten Adsorber und erneutes Entnehmen der Regenerationsgasmenge aus dem Reingas nach dem Filter durch den Gas-Booster und
X Fortführen der Schritte I bis IX bis die Regeneration abgeschlossen ist.

Nach einer weiteren bevorzugten Ausführungsform des erfindungsgemäßen Verfahrens wird als Gas-Booster eine trockenlaufende. Hermetisch dichte Peripheralpumpe mit magnetgekuppeltem Motor oder ein trockenlaufender Drehschieberverdichter oder ein Drehkolbenverdichter eingesetzt.

Gemäß einem weiteren Merkmal des erfindungsgemäßen Verfahrens wird der Volumendurchfluss an Regenerationsgas durch einen Durchflusstransmitter gemessen und mit einem in den Durchflusstransmitter integrierten Durchflussrechner ein aktueller Drehzahlwert als Ist-Wert oder ein Drehzahlwert als Fest-Wert aus dem Volumendurchfluss ermittelt, der an die Steuereinheit weitergegeben wird, die diesen Wert als Steuergröße dem Frequenzumrichter des Gas-Boosters vorgibt. Anstelle des Durchflusstransmitters kann auch ein Schwebekörpermesser eingesetzt werden, ohne die Erfindung zu verlassen.

Die besondere Bedeutung des erfindungsgemäßen Verfahrens besteht darin, dass als interne/externe Stromquelle eine Brennstoffzellen-Einheit und/oder USV-Quelle und/oder ein Notstromaggregat und/oder ein Festnetzanschluss verwendet werden kann. Die Brennstoffzellen-Einheit wird zweckmäßigerweise bis zum Abschluss der Regeneration mit zuvor erzeugtem, in einem Puffer gespeicherten Wasserstoff-Reingas betrieben, kann aber auch mit Wasserstoff aus einem separaten Wasserstoff-Speicher gespeist werden.

Für die Trocknung und Reinigung von hochreinen Wasserstoffgas haben sich Adsorptionsmittel aus Silica-Gel, Molekularsiebe oder Aluminiumoxid-Gel als geeignet erwiesen.

Die Lösung der Aufgabe wird weiterhin mit der erfindungsgemäßen Vorrichtung dadurch erreicht, dass die Zuführleitung in eine Hauptleitung zum Zuführen einer Hauptmenge an wasserstoffreichem Gas in den Reaktor und in eine, von einer Abzweigleitung für eine Teilmenge an sauerstoffreichem Gas einbindende Nebenleitung zum Zuführen einer mit der Teilmenge an sauerstoffreichem Gas angereicherten Nebenmenge an wasserstoffreichem Gas in einen Nebenreaktor zum Erzeugen eines wasserstoffreichen Wärmeträgergases aufgeteilt ist, wobei in der Regenerationsgasleitung als Regenerationsgaserhitzer ein Gas-Gas-Wärmeaustauscher vorgesehen ist, dem ein Wärmespeicher zugeordnet ist, welcher durch die Reaktionswärme aus der Umsetzung von Sauerstoff und Wasserstoff im Nebenreaktor aus der mit der Teilmenge an sauerstoffreichem Gas angereicherten Nebenmenge an wasserstoffreichem Gas gespeist ist und das den Nebenreaktor verlassende Wärmeträgergas im Wärmespeicher auf eine Temperatur oberhalb der Regenerationstemperatur erhitzt, und dass an die Regenerationsgasleitung in Strömungsrichtung vor dem Gas-Gas-Wärmetauscher ein Gas-Booster mit Frequenzumrichter zum Ansaugen der Teilmenge des Reingases und ein Durchflusstransmitter mit integriertem Durchflussrechner zum Ermitteln eines aktuellen Drehzahlwertes des Gas-Boosters als Ist-Wert oder eines Drehzahlwertes als Festwert für den Volumendurchfluss an Regenerationsgas angeschlossen ist, wobei der Durchflusstransmitter mit dem Frequenzumrichter und der Steuereinheit in Verbindung steht, die bei Fortfall der Stromversorgung alle stromverbrauchenden Aggregate, wie Gas-Booster, Steuereinheit, Schaltventile, Regelventile und ggf. Pumpe, auf eine interne/externe Stromquelle zur temporären Elektroenergieversorgung über die Stromleitung mit einer Schalteinrichtung umschaltet, wobei der Gas-Booster einen Saugstrom-Kreislauf des an den Adsorbern aus dem bei Abschaltung der Stromversorgung in der Vorrichtung vorhandenen Restgas gebildeten Rein- und Desorptionsgases auf einem durch die Gasleitungen, den Adsorbern, dem Nebenreaktor/Wärmespeicher, den Gas-Gas-Wärmetauscher, den Reaktor, den Wärmetauscher, Abscheider und Filter führenden inneren Strömungsweg bis zum Abschluss der Regeneration aufrechterhält.

In einer vorteilhaften Ausgestaltung der erfindungsgemäßen Vorrichtung bilden der Nebenreaktor und der Wärmespeicher eine gemeinsame oder separate Baueinheit, wobei der Nebenreaktor für die Nebenmenge des wasserstoffreichen Gases und die Teilmenge des sauerstoffreichen Gases ausgelegt ist und der Wärmespeicher eine dem Nebenreaktor nachgeordneten Schüttung aus Duranit-Kugeln zur Speichern der Reaktionswärme umfasst.

In einer besonders vorteilhaften Ausgestaltungsform der erfindungsgemäßen Vorrichtung ist vorgesehen, dass von der Zuführleitung die Hauptleitung zum Zuführen der Hauptmenge an vorgewärmtem wasserstoffreichen Gas in den Reaktor zum Erzeugen des Prozessgases und die Nebenleitung zum Zuführen der mit der Teilmenge an sauerstoffreichem Gas angereicherten Nebenmenge des vorgewärmten wasserstoffreichen Gases in den dem Wärmespeicher zugeordneten Nebenreaktor zum Erzeugen des wasserstoffreichen Wärmeträgergases abzweigt, wobei der Wärmespeicher mit dem Gas-Gas- Wärmetauscher über eine Vorlaufleitung verbunden ist, eine Rücklaufleitung vom Gas-Gas-Wärmetauscher in die Hauptleitung zurückführt, die Regenerationsgasleitung mit einem Temperatursensor zur Messung der Ist-Temperatur des Regenerationsgases versehen ist, die Hauptleitung in Stromrichtung vor der Rücklaufleitung ein temperaturgesteuertes Regelventil aufweist, welches die Temperatur der Hauptmenge an wasserstoffreichem Gas in Abhängigkeit einer vom Temperatursensor ermittelten Ist-Temperatur auf eine Soll-Temperatur bestimmt, die einer ausreichenden Wärmemenge zum Erhitzen des Regenerationsgases auf Desorptionstemperatur entspricht.

Von besonderer Bedeutung für die Erfindung ist, dass die Abführleitung für das sauerstoffreiche Gas mit der Abzweigleitung verbunden ist, die zum Ableiten der Teilmenge dieses Gases in die Nebenleitung für das wasserstoffreiche Gas vor Eintritt in den Nebenreaktor mündet, wobei die Vorlaufleitung zum Gas-Gas-Wärmetauscher mit einem Temperatursensor zur Messung einer Ist-Temperatur des Wärmeträgergases und die Abzweigleitung für das sauerstoffreiche Gas mit einem temperaturgesteuerten Regelventil versehen ist, welches die Teilmenge an sauerstoffreichem Gas in der Nebenmenge des anderen Gases in Abhängigkeit der ermittelten Ist-Temperatur auf eine Solltemperatur bestimmt, die einer optimalen Wärmemenge zum Aufheizen des Wärmeträgergases entspricht.

Die weitere Ausgestaltung der erfindungsgemäßen Vorrichtung sieht vor, dass der Gas-Booster eine trockenlaufende, hermetisch dichte Peripheralradpumpe mit magnetgekuppeltem Antrieb, ein trockenlaufender Drehschieber-Verdichter oder ein Drehkolben-Verdichter ist. Dies stellt sicher, dass der Wasserstoff trotz seiner hohen Diffusionsgeschwindigkeit und kleinen Molekülgröße nicht aus dem Arbeitsraum entweichen kann und auch eine Verunreinigung des Wasserstoffs durch Öl vermieden wird.

Nach einer weiteren vorteilhaften Ausgestaltung der erfindungsgemäßen Vorrichtung ist der Durchflusstransmitter ein Wirbelstrommesser mit integriertem Durchflussrechner oder ein Schwebekörpermesser.

In weiterer erfindungsgemäßer Ausgestaltung ist die interne Stromquelle eine Brennstoffzellen-Einheit und/oder eine USV-Quelle. Die Stromquelle kann, ohne die Erfindung zu verlassen, auch ein externes Notstromaggregat oder ein zur Verfügung stehender Festnetzanschluss sein, so dass die Stromversorgung für die Zeitdauer bis zum Abschluss der Regeneration aufrechterhalten werden kann.

In einer weiteren vorteilhaften Ausführungsform der Erfindung übernimmt ein Puffer die Speicherung einer ausreichenden Menge von zuvor erzeugtem Reingas, der einerseits über eine durch ein Schaltventil in die Offen- oder Schließlage bringende Abzweigleitung mit der Reingasleitung verbunden ist und andererseits mit der Brennstoffzellen-Einheit über eine durch ein Schaltventil öffnende oder schließende Zuführleitung zum Zuführen des Reingases in die Brennstoffzellen-Einheit in Verbindung steht.
Zur Erfindung gehört aber auch, wenn die Brennstoffzellen-Einheit durch einen separaten Wasserstoff-Speicher mit Wasserstoff versorgt wird, der mit der Brennstoffzellen-Einheit über die durch das Schaltventil in die Offen- oder Schließlage bringende Zuführleitung zum Zuführen von Wasserstoff aus dem Puffer in die Brennstoffzellen-Einheit in Verbindung steht.

Die weitere Ausgestaltung der erfindungsgemäßen Vorrichtung sieht vor, dass die Brennstoffzellen-Einheit ein internes Steuerglied aufweist, das mit der Steuereinheit und mit einer Schalteinrichtung verbunden ist, die auf Veranlassung der Steuereinheit die Brennstoffzellen-Einheit zu- oder abschaltet.

Zweckmäßigerweise sind die Wechselstrom verbrauchenden Aggregate der erfindungsgemäßen Vorrichtung, beispielsweise der Gas-Booster und die Pumpe elektrisch über einen Wechselrichter mit der Brennstoffzellen-Einheit verbunden. Die Schalt- und Regelventile und die Steuereinheit können je nach Erfordernis ebenso an den Wechselrichter angeschlossen sein oder von dem durch von der Brennstoffzellen-Einheit gelieferten Gleichstrom versorgt werden. Ohne die Erfindung zu verlassen, kann aber auch eine USV-Quelle oder eine Notstromversorgung die Stromversorgung der Aggregate übernehmen. Ebenso ist es möglich, die Stromversorgung der Aggregate durch einen Festnetzanschluss zu gewährleisten.

Von besonderem Vorteil ist auch, dass der Strömungsweg aus der bei Stromausfall durch das Regelventil geschlossenen Hauptleitung, durch das Regelventil geschlossenen Abzweigleitung und durch das Schaltventil geschlossenen Desorptionsgasleitung von der Prozessgasleitung über den durch die Schaltventile auf Adsorption geschalteten Adsorber, einen durch ein Schaltventil zum Verbraucher hin geschlossenen, aber zur Regenerationsgasleitung offenen gehaltenen Abschnitt der Reingasleitung, der Regenerationsgasleitung über den durch die Schaltventile auf Regeneration geschalteten Adsorber, einen Abschnitt der Desorptionsgasleitung, der Zuführleitung zur Nebenleitung über den Nebenreaktor und Wärmespeicher, der Vorlaufleitung, den Gas-Gas-Wärmetauscher, der in die Hauptleitung einbindenden Rücklaufleitung über den Reaktor zurück in die Prozessgasleitung gebildet ist.
Durch die Rückführung der Teilmenge an Reingas als Desorptionsgas in das Prozessgas entstehen bei der Regeneration des Adsorbers keine Gasverluste und Emissionen, wodurch die Umweltverträglichkeit und Wirtschaftlichkeit der erfindungsgemäßen Vorrichtung verbessert wird.

Weiterhin ist erfindungsgemäß vorgesehen, dass in die Zuführleitung für die Brennstoffzellen-Einheit ein Schaltventil eingebunden ist, welches von der Steuereinheit den Stellbefehl zum Zuschalten im Falle der Abschaltung der Elektroenergieversorgung und zum Abschalten bei Zuschaltung der Elektroenergieversorgung erhält.
Bei Wegfall der Elektroenergieversorgung kann der Betrieb der Regeneration bis zu ihrem Abschluss weitergeführt werden, weil der Gas-Booster, die Pumpe, die Schalt- und Regelventile und die Steuereinheit wegen ihres verhältnismäßig geringen Verbrauches an Elektroenergie über die Brennstoffzellen-Einheit oder eine USV-Quelle mit Strom versorgt werden können.
Der Verbrauch an Elektroenergie bis zum Abschluss der Regeneration beträgt etwa 2-20 kWh, die ohne weiteres von einer Brennstoffzellen-Einheit zur Verfügung gestellt werden können.

In einer besonders zweckmäßigen Ausgestaltung der erfindungsgemäßen Vorrichtung sind ein Wärmetauscher zum Kühlen des Prozessgases bzw. Desorptionsgases und ein Abscheider zum Abscheiden des auskondensierten Wassers hintereinander in Stromrichtung des Prozessgases angeordnet, wobei der Abscheider über eine Pumpe zum Fördern des auskondensierten Wassers an eine in den Elektrolyseur mündende Förderleitung angeschlossen ist bzw. der Abscheider im Fall des Stromausfalls das auskondensierte Wasser bis zum Abschluss der Regeneration zwischenspeichert.

In einer vorteilhaften Ausgestaltung der Erfindung wird die Teilmenge an sauerstoffreichem Gas in Abhängigkeit einer von einem Temperatursensor in der Vorlaufleitung gemessenen Ist-Temperatur durch ein der Abzweigleitung für sauerstoffreiches Gas zugeordnetes Regelventil auf eine Soll-Temperatur eingeregelt, die einer optimalen Wärmemenge für die Regeneration entspricht. Dies ermöglicht es, auf die Einstellung der Temperatur durch die Zugabe der Menge an sauerstoffreichem Gas gezielt durch die exotherme Reaktion am Katalysator im Nebenreaktor und damit auf die Wärmemenge Einfluss zunehmen, in dem die Temperatur des Wärmeträgergases je nach Menge des zugegebenen sauerstoffreichen Gases in das wasserstoffreiche Gas erhöht oder herabgesetzt wird.

Eine weitere bevorzugte und vorteilhafte Ausführungsform der Erfindung sieht vor, dass die Temperatur des Regenerationsgases in Abhängigkeit einer von einem Temperatursensor in Stromrichtung hinter dem Gas-Gas-Wärmetauscher gemessenen Ist-Temperatur auf eine der Desorptionstemperatur entsprechende Soll-Temperatur durch ein in die Hauptleitung in Stromrichtung hinter dem Abzweig zum Nebenreaktor, aber vor der Rücklaufleitung eingebundenes, mit der Steuereinheit kommunizierendes Regelventil eingeregelt wird.

In einer vorteilhaften Ausführungsform der Erfindung kann die im Wärmespeicher gespeicherte Wärmemenge so eingestellt werden, dass bei plötzlichem Fortfall der Stromversorgung des Elektrolyseurs die Regeneration mit dem im Strömungsweg geführten Gas weitergeführt und ordnungsgemäß abgeschlossen werden kann.
Das hat den Vorteil, dass bei wieder vorhandener Elektroenergie zum Betrieb der Elektrolyse die so regenerierten Adsorber sofort zur Trocknung des elektrolytisch hergestellten wasserstoffreichen Gases bereitstehen und nicht erst noch regeneriert werden müssen.

Von besonderer Bedeutung für die Eignung der Erfindung zum Trocknen und Reinigen von wasserstoffreichem Gas ist, dass die Teilmenge an Reingas für die Regeneration durch einen hermetisch dichten und ölfreien Gas-Booster mit Frequenzumrichter aus dem Reingas entnommen wird.

In einer weiteren vorteilhaften Ausgestaltung der Erfindung können Wirbelstrommesser mit integriertem Durchflussrechner oder Schwebekörpermesser als Durchflusstransmitter verwendet werden.

Für die Trocknung und Reinigung von hochreinen Wasserstoffgas haben sich Adsorptionsmittel aus Silica-Gel, Molekularsiebe oder Aluminiumoxid-Gel als geeignet erwiesen.

Für die weitere Ausgestaltung der Erfindung kann das Prozessgas und das rückgeführte Desorptionsgas durch einen gemeinsamen Wärmetauscher gekühlt und das durch die Kühlung auskondensierte Wasser in einem Abscheider aus dem Prozessgas ausgeschleust sowie das Wasser durch eine Pumpe in den Elektrolyseur zurückbefördert werden, wodurch der Wasserbedarf des Elektrolyseurs reduziert werden kann.

Von besonderer Bedeutung für die Erfindung ist auch, dass die Adsorption und Regeneration bei Fortfall der Stromversorgung aus Windkraft und/oder Solarenergie oder bei einem Black-Out durch die für den Betrieb der Regeneration erforderliche Wärmemenge aus dem Wärmespeicher bis zu ihrem Abschluss zur Verfügung gestellt werden kann.

Der Motor des Gas-Boosters, die Pumpe, die Schalt- und Regelventile sowie die Steuereinheit verbrauchen im Vergleich zum Elektrolyseur verhältnismäßig wenig Strom, so dass diese Baueinheiten in einem solchen Fall aus der internen/externen Stromquelle, vorzugsweise einer Brennstoffzellen-Einheit und/oder USV-Quelle und/oder Notstromaggregat und/oder Festnetzanschluss mit Strom versorgt werden können. Vorteilhafterweise wird die Brennstoffzellen-Einheit mit vor Abschaltung der Elektrolyse erzeugten und gespeicherten Reingas (Wasserstoff) gespeist.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen
Fig. 1 eine schematische Darstellung des Aufbaus der erfindungsgemäßen Vorrichtung mit Nebenreaktor, Wärmespeicher und Regenerationsgaserhitzer zum Aufheizen des Regenerationsgases,
Fig. 2 ein schematisches Fließschema bei Betrieb der elektrolytischen Wasserspaltung mit Darstellung des Durchflusses beim Adsorbieren und Regenerieren und
Fig. 3 eine schematische Darstellung der Regeneration des in den Adsorbern, im Reaktor, Nebenreaktor im Wärmespeicher, Gas-Gas-Wärmetauscher, Gas-Booster, in den Leitungen und in Ventilen verbliebenen Gases bei abgeschalteter Wasserspaltung.

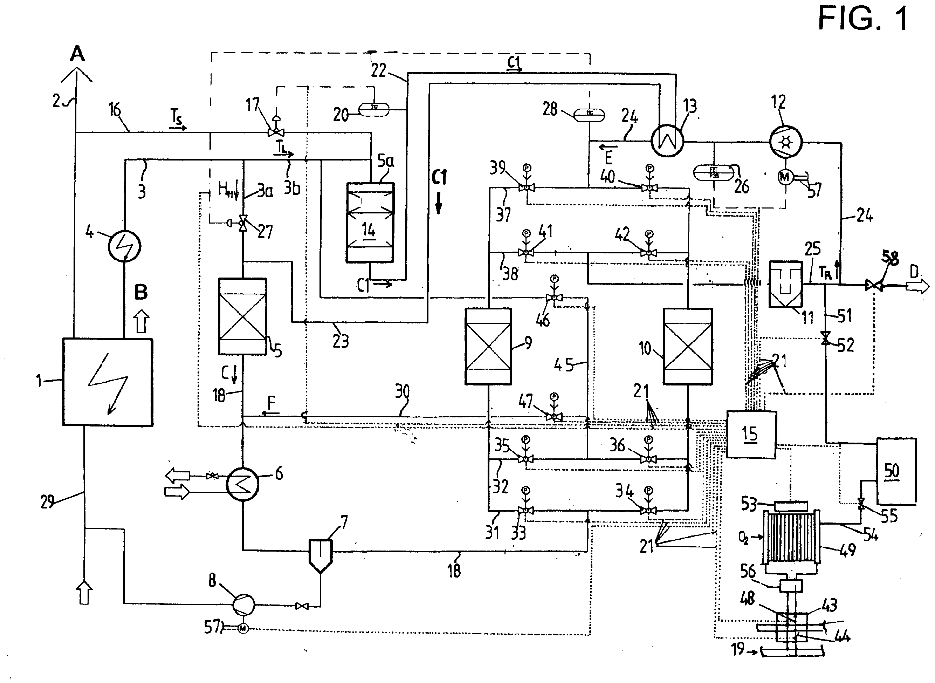

Die Fig. 1 zeigt den grundsätzlichen Aufbau der erfindungsgemäßen Vorrichtung. In einem mit elektrischem Strom aus regenerativer Sonnenenergie und/oder Windkraft versorgten Elektrolyseur 1 wird Wasser in ein sauerstoffreiches Gas A und in ein wasserstoffreiches Gas B elektrolytisch zerlegt. Das sauerstoffreiche Gas A enthält als Hauptbestandteil Sauerstoff, Reste von Wasserstoff und Wasser, dass wasserstoffreiche Gas B Reste von Sauerstoff und Wasser. Derartige Elektrolyseure verbrauchen erhebliche Mengen an Elektroenergie, die beispielsweise im zwei- bis dreistelligen MW-Bereich liegen. Die fluktuierende Natur der regenerativen Stromquellen bedingt, dass der Elektrolyseur 1 nicht kontinuierlich mit Strom versorgt werden kann und bei Wegfall der regenerativen Stromversorgung abgeschaltet werden muss, wenn nicht andere Stromquellen zur Verfügung stehen. Die nachfolgende Trocknung und Reinigung des wasserstoffreichen Gases B ist damit ebenso betroffen.
Das erzeugte sauerstoffreiche Gas A gelangt durch eine Abführleitung 2 in die Atmosphäre oder zu einem nicht weiter beschriebenen Verbraucher und das wasserstoffreiche Gas B wird über die Zulaufleitung 3 der erfindungsgemäßen Vorrichtung zugeführt. Die Zulaufleitung 3 teilt sich in eine Hauptleitung 3a, die eine Hauptmenge H_{M} des vorgewärmten wasserstoffreichen Gases B in den Reaktor 5 führt, und in eine Nebenleitung 3b, die eine Nebenmenge T_{L} des vorgewärmten wasserstoffreichen Gases B einem Nebenreaktor 5a zuführt. Bei einem Volumendurchfluss von 10.000 m³/h an wasserstoffreichem Gas B entfallen je nach verwendetem Adsorptionsmittel etwa 500 bis 1500 m³/h auf die Nebenmenge,
Im Wesentlichen umfasst die erfindungsgemäße Vorrichtung einen Erhitzer 4 zum Vorwärmen des wasserstoffreichen Gases B, den Reaktor 5 für die katalytische exotherme Reaktion zwischen dem in der Hauptmenge H_{M} des Gases B enthaltenen Wasserstoff und dem Sauerstoff zu einem wasserhaltigen heißen Prozessgas C, einen Flüssig-Gas-Wärmetauscher 6 zum Kühlen des Prozessgases C mit Wasser, einen Abscheider 7 zum Abscheiden des bei der Kühlung auskondensierten Wassers, eine Pumpe 8 zum Ausschleusen des abgeschiedenen Wassers in die Förderleitung 29 des Elektrolyseurs 1, mindestens zwei nebeneinander angeordnete, mit Adsorptionsmittel gefüllte Adsorber 9 und 10, einen Filter 11 für das die Adsorber 9 oder 10 verlassende getrocknete Reingas D, einen Gas-Booster 12 zum Entnehmen einer Teilmenge T_{R} aus dem Reingas D als Regenerationsgas E über die Regenerationsgasleitung 24, einen in der Regenerationsgasleitung 24 eingebundenen Gas-Gas-Wärmetauscher 13 zum Aufheizen des Regenerationsgases E auf Desorptionstemperatur, einen Nebenreaktor 5a für die katalytische exotherme Reaktion zwischen dem in der Nebenmenge T_{L} enthaltenen Wasserstoff und dem durch die Abzweigleitung 16 zugeführte Teilmenge T_{S} an Sauerstoff zu einem wasserhaltigen heißen Wärmeträgergas C1, einen Wärmespeicher 14 zum Speichern und Aufheizen des Wärmeträgergases C1 für den Wärmeaustausch mit dem Regenerationsgas E. Diese Baueinheiten bzw. Baugruppen sind durch Leitungen und Schalt- und Regelventile verbunden, die im Folgenden näher beschrieben werden. Eine Steuereinheit 15 steuert die Schalt- und Regelventile und somit das Umschalten der Adsorber in den Adsorptions- oder Regenerationszustand und umgekehrt sowie das Entnehmen der Teilmenge T_{S} an sauerstoffreichem Gas A, der Teilmenge T_{R} an Reingas D und der Nebenmenge T_{L} an wasserstoffreichem Gas B.

Die Hauptmenge H_{M} des wasserstoffreichen Gases B gelangt über eine Hauptleitung 3 in den Erhitzer 4, in dem es beispielsweise um 10 bis 20 °C aufgeheizt wird, um eine Blockierung des Katalysators im Reaktor 5 bzw. Nebenreaktor 5a zu vermeiden.
Von der Abführleitung 2 für das sauerstoffreiche Gas A zweigt für die Teilmenge T_{S} an Gas A eine Abzweigleitung 16 ab, die in die Nebenleitung 3b für die Nebenmenge T_{L} des wasserstoffreichen Gases B mündet.
Ein Regelventil 17 ist in Stromrichtung der abgezweigten Teilmenge T_{S} des sauerstoffreichen Gases A in die Abzweigleitung 16 vor der Einmündung in die Nebenleitung 3b eingebunden. Es bestimmt die Teilmenge T_{S} an sauerstoffreichem Gas A, die in die Nebenmenge T_{L} des wasserstoffreichen Gases B zugeführt wird.
Die mit sauerstoffreichen Gas A angereicherte Nebenmenge T_{L} des Gases B gelangt in den Nebenreaktor 5a, in dem Wasserstoff und Sauerstoff exotherm unter Freisetzung von Reaktionswärme umgesetzt werden. Dem Nebenreaktor 5a ist der Wärmespeicher 14 aus einer Duranit-Kugel-Schüttung zugeordnet, die die Reaktionswärme aufnimmt, speichert und das den Nebenreaktor 5a verlassende wasserstoffreiche Wärmeträgergas C1 aufheizt. Der Nebenreaktor 5a und der Wärmespeicher 14 bilden zusammen eine Baugruppe, um Wärmeverluste zu minimieren.
Vom Wärmespeicher 14 führt eine Vorlaufleitung 22, in der das auf oberhalb der Regerationstemperatur aufgeheizte Wärmeträgergas C1 dem Gas-Gas-Wärmetauscher 13 zugeführt wird. Die Rücklaufleitung 23 vom Gas-Gas-Wärmetauscher 13 mündet in Stromrichtung der Hauptmenge H_{M} des wasserstoffreichen Gases B vor dem Hauptrektor 5 in die Hauptleitung 3a ein. Die Stromrichtung ist jeweils durch Pfeile in den Figuren kenntlich gemacht.

In der Vorlaufleitung 22 befindet sich ein Temperatursensor 20, der die Ist-Temperatur des den Nebenreaktor 5a verlassenden Wärmeträgergases C1 misst und diese über eine Steuerleitung 21 an die Steuereinheit 15 übermittelt, welche die Stellbefehle für die Soll-Temperatur an das Regelventil 17 übergibt.
In Abhängigkeit der gemessenen Ist-Temperatur bestimmt somit das Regelventil 17 die Teilmenge T_{S} an sauerstoffreichem Gas A, die in das wasserstoffreiche Gas B gelangt, wodurch Einfluss auf die Reaktionswärme der exothermen Reaktion und damit auf die Temperatur des Wärmeträgergases C1 genommen wird. Die Temperaturen des Wärmeträgergases C1 können beispielsweise Werte zwischen etwa 150 °C und 320 °C annehmen.

Der Gas-Gas-Wärmetauscher 13 ist in die Regenerationsgasleitung 24 eingebunden, welche mit ihrem einen Ende kopfseitig in den Adsorber 9 bzw. 10 führt und mit ihrem anderen Ende von der Reingasleitung 25 nach dem Filter 11 abzweigt. Der Gas-Booster 12, der in Stromrichtung der Teilmenge T_{R} des Reingases D als Regenerationsgas E in der Regenerationsgasleitung 24 vorgesehen ist, entnimmt bzw. saugt die Teilmenge T_{R} an Reingas D als Regenerationsgas E an und fördert die Teilmenge T_{R} des Regenerationsgases E durch die Regenerationsgasleitung 24 über den Gas-Gas-Wärmetauscher 13 kopfseitig in den jeweilig auf Regeration geschalteten Adsorber 9 oder 10, wobei die Teilmenge T_{R} des Regenerationsgases E auf Desorptionstemperatur aufgeheizt wird.
Der Gas-Booster 12 ist eine trockenlaufende, also ölfreie, hermetisch dichte Peripheralpumpe mit magnetgekuppeltem Motor mit Frequenzumrichter.
In Stromrichtung der Teilmenge T_{R} des Regenerationsgases E ist hinter dem Gas-Booster 12 in die Regenerationsgasleitung 24 ein Durchflusstransmitter 26 mit Durchflussrechner integriert, der den Volumendurchfluss der Teilmenge T_{R} misst, einen aktuellen Drehzahlwert als Ist-Wert oder einen Drehzahlwert als Festwert aus dem Volumendurchfluss ermittelt und den jeweiligen Wert über die Steuerleitung 21 der Steuereinheit 15 mitteilt, die diesen Wert dem Frequenzumrichter als Steuergröße vorgibt.
Anstelle des Gas-Boosters 12 ist auch ein trockenlaufender Drehschieber-Verdichter oder ein Drehkolbenverdichter geeignet. Als Durchflusstransmitter 26 haben sich Wirbelstrommesser oder Schwebekörpermesser als geeignet erwiesen.

In die Hauptleitung 3a ist ein Regelventil 27 eingebunden, das mit einem in Stromrichtung der Teilmenge T_{R} hinter dem Gas-Gas-Wärmetauscher 13 an der Regenerationsgasleitung 24 vorgesehenen Temperatursensor 28 elektrisch verbunden ist. Der Temperatursensor 28 misst die Ist-Temperatur des Regenerationsgases E, gibt diese über die Steuerleitung 21 an die Steuereinheit 15 weiter, die ihrerseits die entsprechenden Stellbefehle an das Regelventil 27 übermittelt. Die Temperatur der Teilmenge T_{R} des Regenerationsgases E wird somit über den Gas-Gas-Wärmetauscher 13 in Abhängigkeit der Ist-Temperatur auf eine der Desorptionstemperatur entsprechende Soll-Temperatur eingestellt.

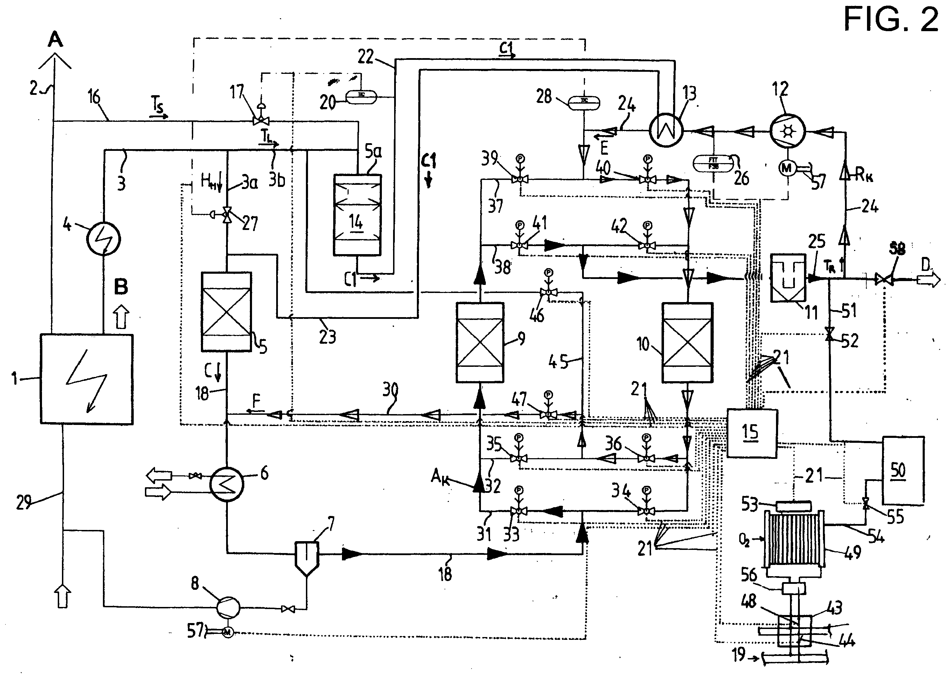

Die Prozessgasleitung 18 führt in Stromrichtung des Prozessgases C in den Flüssig-Gas-Wärmetauscher (Kühler) 6, mit welchem das heiße Prozessgas C auf etwa 10 °C bis 30 °C abgekühlt wird. Mit dem in Stromrichtung des Prozessgases C dem Kühler 6 nachgeordneten Abscheider 7 wird das auskondensierte Wasser ausgeschleust und von der Pumpe 8 über eine Förderleitung 29 in die Wasserzuleitung für den Elektrolyseur zurückbefördert.
Das gekühlte Prozessgas C gelangt - wie aus der Fig. 2 ersichtlich- sodann fußseitig in den auf Adsorption geschalteten Adsorber 9, in dem das Prozessgas C am Adsorptionsmittel getrocknet wird. Das getrocknete Prozessgas C verlässt als Reingas D kopfseitig den Adsorber 9 und wird durch die Reingasleitung 25 über den Filter 11 zum Verbraucher abgeführt.
Die Regenerationsgasleitung 24 führt kopfseitig in Adsorber 10, so dass das aufgeheizte Regenerationsgas E das Adsorptionsmittel im Adsorber 10 im Gegenstrom zur Stromrichtung der Adsorption im Adsorber 9 durchströmt und den Adsorber 10 fußseitig durch die Desorptionsgasleitung 30 verlässt, in die ein Schaltventil 47 eingebunden ist, das zum Öffnen und Schließen über die Steuerleitung 21 mit der Steuereinheit 15 in Verbindung steht. Die Desorptionsgasleitung mündet in Stromrichtung nach dem Hauptreaktor 5 aber vor dem Kühler 6 in die Prozessgasleitung 18 ein.
Als Adsorptionsmittel kommen Silica-Gel, Molekularsiebe oder Aluminiumoxid-Gel zum Einsatz.

Es wird jetzt auf die Adsorber 9 und 10 Bezug genommen.
In Fig. 2 befindet sich der Adsorber 9 in der Adsorptionsphase und der Adsorber 10 in der Regenerationsphase.
Die zum Adsorber 9 fußseitig einmündende Prozessgasleitung 18 und die vom Adsorber 10 fußseitig kommende Desorptionsgasleitung 30 sind untereinander durch zwei parallel angeordnete Verbindungsleitungen 31 und 32 vermascht und jede der Leitungen 31 und 32 ist mit zwei druckgesteuerten Schaltventilen 33, 34 bzw. 35, 36 in Offenstellung oder Schließstellung bringbar, so dass die Adsorber 9 und 10 wechselseitig von der Adsorptionsphase in die Regenerationsphase und umgekehrt umgeschaltet werden können.
Die kopfseitig vom Adsorber 9 abgehende Reingasleitung 25 und die kopfseitig in den Adsorber 10 führende Regenerationsgasleitung 24 sind ebenso durch zwei parallel angeordnete Verbindungsleitungen 37 bzw. 38 vermascht und jede der Leitungen 37 und 38 können mit zwei druckgesteuerten Schaltventilen 39, 40 bzw. 41, 42 geöffnet und geschlossen werden.
Die Schaltventile 33, 34, 35, 36 und die Schaltventile 39, 40, 41, 42 sind über die Steuerleitung 21 mit der Steuereinheit 15 verbunden, die die Schaltventile 33 bis 36 bzw. 39 bis 42 in Abhängigkeit des Adsorptions- und Regenerationsprozesses ansteuert.
Für den Fall, dass der Adsorber 9 im Adsorptionszustand und der Adsorber 10 im Regenerationszustand ist, befindet sich das fußseitige Schaltventil 33 und das kopfseitige Schaltventil 41 des Adsorbers 9 in Offenstellung, die fußseitigen Schaltventile 34 und 35 sowie die kopfseitigen Schaltventile 39 und 42 des Adsorbers 9 in Schließstellung, während das kopfseitige Schaltventil 40 und das fußseitige Schaltventil 36 des Adsorbers geöffnet ist.
In die Verbindungsleitung 32 ist eine in die Nebenleitung 3b führende Zuführleitung 45 für das bei Abschaltung des Elektrolyseurs 1 in den Baueinheiten der Vorrichtung verbliebene Gas angeschlossen. Die Zuführleitung 45 mündet in Stromrichtung der Nebenmenge T_{L} des wasserstoffreichen Gases B vor dem Nebenreaktor 5a in die Nebenleitung 3b und kann durch ein über die Steuerleitung 21 mit der Steuereinheit 15 verbundenes druckgesteuertes Schaltventil 46 geöffnet oder geschlossen werden.

In Fig. 2 ist die Durchflussrichtung der Gase A, B, C, C1, D, E und F durch Pfeile kenntlich gemacht.
Die Teilmenge T_{R} an Reingas D wird als Regenerationsgas E durch den Gas-Booster 12 mit Frequenzumrichter angesaugt.
Der Durchflusstransmitter 26 mit integriertem Durchflussrechner ermittelt einen aktuellen Drehzahlwert als Ist-Wert oder ein Drehzahlwert als Festwert für den Volumendurchfluss. Diese Werte werden als Stellgröße an die Steuereinheit 15 zur Einstellung der Drehzahlen des Gas-Boosters 12 weitergeleitet. Das Regenerationsgas E wird durch das Wärmeträgergas C₁ erhitzt, welches aus der Umsetzung von Sauerstoff und Wasserstoff einer zusätzlich mit einer Teilmenge T_{S} an sauerstoffreichem Gas A angereicherten Nebenmenge T_{L} von wasserstoffreichem Gas B auf oberhalb der Regenerationstemperatur aufgeheizt wird.
Der Gas-Booster 12 ist eine trockenlaufende, also ölfreie, hermetisch dichte Peripheralpumpe mit magnetgekuppeltem Motor mit Frequenzumrichter.
Anstelle des Gas-Boosters 12 ist auch ein trockenlaufender Drehschieber-Verdichter oder ein Drehkolbenverdichter geeignet. Als Durchflusstransmitter 26 haben sich Wirbelstrommesser oder Schwebekörpermesser als geeignet erwiesen.

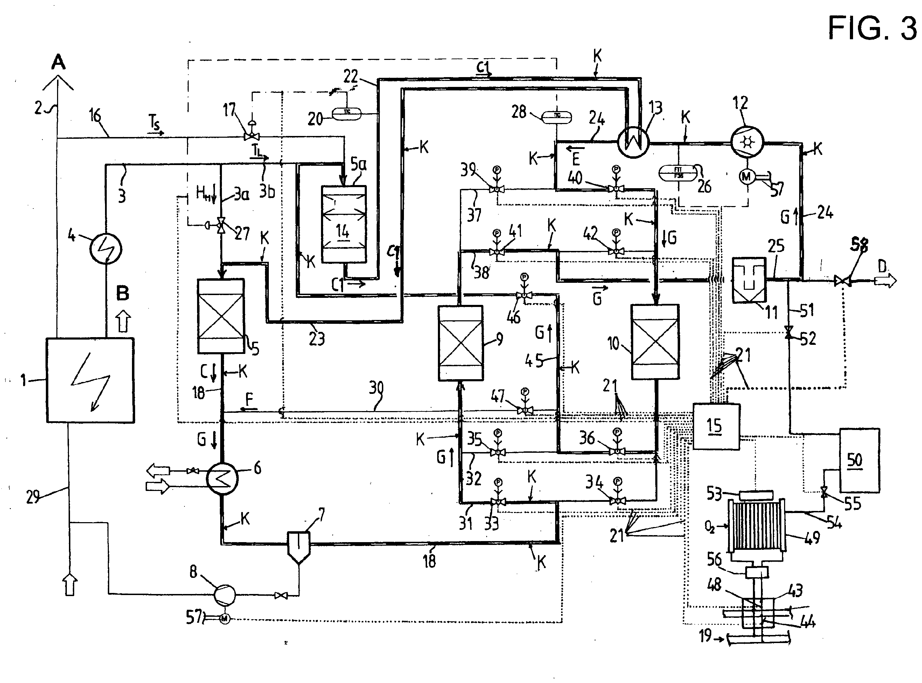

Die Fig. 3 zeigt die Darstellung des Weiterbetriebs der Regeneration bei Wegfall der regenerativen Stromversorgung.
In die Einspeiseleitung 19 für die regenerative Stromversorgung ist eine elektronische Schalteinrichtung 43 integriert, die einen Schalter 44 zum Ab- und Zuschalten der regenerativen Stromversorgung und einem Schalter 48 zum Zu- und Abschalten der internen/externen Stromquelle umfasst. Die elektronische Schalteinrichtung 43 detektiert den Wegfall oder das erneute Zuschalten der regenerativen Stromversorgung und gibt diese Information über die Steuerleitung 21 an die Steuereinheit 15 weiter, die ihrerseits den entsprechenden Schaltvorgang an den Schaltern 44 bzw. 48 zum Zu- oder Abschalten der internen/externen Stromquelle auslöst.
Als interne Stromquelle kommt beispielsweise eine Brennstoffzellen-Einheit 49 zum Einsatz, die aus einem mit Reingas D (Wasserstoff) als Reaktionsgas gefüllten Puffer 50 und aus der Luft mit Sauerstoff versorgt wird. Der Puffer 50 ist vorzugsweise mit der Reingasleitung 25 über eine durch ein Schaltventil 52 absperr- oder öffnungsbare Abzweigleitung 51 verbunden und nimmt eine ausreichende Menge des von der Vorrichtung zuvor erzeugten Reingases D auf. Natürlich kann aber auch ein mit Wasserstoff gefüllter separater Speicher die Brennstoffzellen-Einheit 49 mit Wasserstoff versorgen. Die Brennstoffzellen-Einheit 49 besitzt ein Steuerglied 53, das über die Steuerleitung 21 mit der Steuereinheit 15 verbunden ist.
Vom Puffer 50 führt zur Brennstoffzellen-Einheit 49 eine Zuführleitung 54, in die ein druckgesteuertes Schaltventil 55 zum Öffnen oder Schließen der Wasserstoffzufuhr in die Brennstoffzellen-Einheit 49 eingebunden ist. Der Stromanschluss der Brennstoffzellen-Einheit 49 ist über einen Wechselrichter 56 mit der Schalteinrichtung 43 verbunden, die auf Veranlassung der Steuereinheit 15 je nach Erfordernis die Stromleitung 57 mit den Verbrauchern wie den Gas-Booster 12, die Pumpe 8, die Steuereinheit 21, die Schaltventile 33 bis 36 bzw. 39 bis 42, 46, 47, 52, 55 und 58 sowie der Regelventile 17 und 27 verbindet.
Der Schaltvorgang an den Schaltventilen 52 und 55 zum Öffnen der Abzweigleitung 51 und Zuführleitung 54 für die Versorgung der Brennstoffzellen-Einheit 49 mit Wassersoff erfolgt in Verbindung mit dem Steuerglied 53 über die Steuerleitung 21 durch die Steuereinheit 15.
Der Wechselrichter 56 wandelt den von der Brennstoffzellen-Einheit 49 erzeugten Strom in Wechselstrom für die Pumpe 8 und den Gas-Booster 12 um.
Die Brennstoffzellen-Einheit 49 ist leistungsmäßig so ausgelegt, dass sie in der Lage ist, die Baugruppen der Vorrichtung solange mit Strom zu versorgen, bis die Regeneration der Adsorber ordnungsgemäß auch bei Fortfall der regenerativen Stromversorgung beendet werden kann. Die Brennstoffzellen-Einheit 49 liefert etwa 3-20 kW.

Es wird jetzt auf die Förderung des in der erfindungsgemäßen Vorrichtung befindlichen Restgases G aus wasserstoffreichem Gas B, Prozess-, Rein-, Regenerations-, Desorptions- und Wärmeträgergas C, D, E, F, C1 im Kreislauf-Saugbetrieb eingegangen.
Der Gas-Booster 12 fördert bzw. saugt das vom Adsorber 10 kommende Reingas D in einer Teilmenge T_{R} als Regenerationsgas E aus der zum Verbraucher durch das Schaltventil 58 abgesperrten Reingasleitung 25 in einen zur Reingasleitung 25 geöffneten Strömungsweg K an, der bei durch das Regelventil 27 geschlossener Hauptleitung 3a, durch das Regelventil 17 geschlossener Abzweigleitung 16 und durch das Schaltventil 47 geschlossener Desorptionsgasleitung 30 von der Prozessgasleitung 18 über den durch die Schaltventile 33 bis 36 auf Adsorption geschalteten Adsorber 9, einen Abschnitt der zum Verbraucher hin durch ein Schaltventil 58 gesperrten, aber zur Regenerationsgasleitung 24 offenen Reingasleitung 25, über den durch die Schaltventile 39 bis 42 auf Regeneration geschalteten Adsorber 10, einen Abschnitt der Desorptionsgasleitung 30, der Zuführleitung 45 zur Nebenleitung 3b über den Nebenreaktor 5a und Wärmespeicher 14, der Vorlaufleitung 22, dem Gas-Gas-Wärmetauscher 13 und der in die Hauptleitung 3a einbindenden Rücklaufleitung 23 über den Reaktor 5 in die Prozessgasleitung 18 über den Wärmetauscher 6, Abscheider 7 und Adsorber 9 zurück in die Reingasleitung 25 gebildet wird.
Die angesaugte Teilmenge T_{R} wird durch den Gas-Booster 12 so eingestellt, dass der Volumendurchfluss mit dem Durchflusstransmitter 26 gemessen, ein aktueller Drehzahlwert als Ist-Wert oder ein Drehzahlwert als Fest-Wert aus dem gemessenen Volumendurchfluss ermittelt und dieser Wert an die Steuereinheit 15 übermittelt wird, die diesen Wert dem Frequenzumrichter des Gas-Boosters 12 als Steuergröße vorgibt.
Das Regenerationsgas E wird durch das Wärmeträgergas C1 erhitzt, welches aus der Umsetzung von Sauerstoff und Wasserstoff einer zusätzlich mit einer Teilmenge T_{S} an sauerstoffreichem Gas A angereicherten Nebenmenge T_{L} von wasserstoffreichem Gas B auf oberhalb der Regenerationstemperatur aufgeheizt wird.

Das erfindungsgemäße Verfahren umfasst gemäß dem hier dargestellten Beispiel bei anliegender Stromversorgung des Elektrolyseurs folgende Schritte:
a) Aufteilen des wasserstoffreichen Gases B in die Hauptmenge H_{M}, die dem Reaktor 5 zum Erzeugen des Prozessgases C zugeführt wird, und in eine Nebenmenge T_{L}, die dem Nebenreaktor 5a zum Erzeugen eines wasserstoffreichen Wärmeträgergases C1 zugeführt wird,
b) Abzweigen einer Teilmenge T_{S} an sauerstoffreichem Gas A und Zuführen dieser Teilmenge in die Nebenmenge T_{L} gemäß Schritt a) vor Eintritt in den Nebenreaktor 5a,
c) Einstellen der Temperatur des Wärmeträgergases C1 durch Regeln der Zufuhr der Teilmenge T_{S} an sauerstoffreichem Gas A in die Teilmenge T_{L} des wasserstoffreichen Gases B,
d) Zuführen der Nebenmenge T_{L} des wasserstoffreichen Gases B und der Teilmenge T_{S} des sauerstoffreichen Gases A in den Nebenreaktor 5a zum Erzeugen des Wärmeträgergases C1, Speichern der Reaktionswärme im Wärmespeicher 14 und Aufheizen des Wärmeträgergases C1 auf eine Temperatur, die größer als die Regenerationstemperatur ist,
e) Weiterleiten des aufgeheizten Wärmeträgergases C1 über eine Vorlaufleitung 22 in den Gas-Gas-Wärmetauscher 13 zum Durchführen eines Gas-Gas-Wärmetauschs zwecks Aufheizen des Regenerationsgases auf Desorptionstemperatur und Rückführen des wärmeentkoppelten Wärmeträgergases C1 über eine Rücklaufleitung 23 in die die Hauptmenge H_{M} des wasserstoffreichen Gases B führende Hauptleitung 3a,
f) Einstellen der Temperatur des Regenerationsgases E durch Regeln der Zufuhr der Nebenmenge T_{L} gemäß Schritt a) in den Nebenreaktor 5a und den Wärmespeicher 14 zum Erhitzen des Regenerationsgases E auf Desorptionstemperatur,
g) Kühlen des heißen Prozessgases C, Abscheiden des beim Kühlen auskondensierten Wassers und Abpumpen des Wassers in die Förderleitung 29 des Elektrolyseurs 1 oder in einen separaten Speicher oder Zwischenspeichern des Wassers im Abscheider 7 mit nachfolgenden Abführen des Wassers,
h) Abzweigen der Teilmenge T_{R} an Reingas D als Regenerationsgas E und Einstellen dieser Teilmenge durch Regeln des Volumendurchflusses an Regenerationsgas in die Adsorber 9 oder 10,
k) Einleiten des erhitzten Regenerationsgases E nach Schritt Schritt f) in den auf Regeneration geschalteten Adsorber 9, 10 zur Desorption des adsorbierten Wassers vom Adsorptionsmittel und
l) Rückführen des beladenen Desorptionsgases F in das heiße Prozessgas C vor dem Kühlen gemäß Schritt g) oder in das wasserstoffreiche Gas B vor Eintritt in den Nebenreaktor 5a.

Durch die Zufuhr der Teilmenge Ts an sauerstoffreichem Gas A zur Nebenmenge T_{L} des wasserstoffreichen Gases B wird die entstehende Reaktionswärme bei der Reaktion im Nebenreaktor 5a im Wärmeträgergas C1 so eingestellt, dass die Regeneration des mit Wasser beladenen Adsorbers 9 oder 10 ohne eine weitere Energiequelle durchgeführt werden kann. Der Wärmespeicher 14 ist dabei so dimensioniert, dass die durch die Reaktionswärme erzeugte und gespeicherte Wärmemenge ausreicht, um die Regeneration des mit Wasser beladenen Adsorbers 9 oder 10 bei Fortfall der Stromversorgung des Elektrolyseurs 1 weiterzuführen und ordnungsgemäß abzuschließen.
Dies erfolgt so, dass die Teilmenge T_{S} an sauerstoffreichem Gas A in Abhängigkeit einer von dem Temperatursensor 20 an der Vorlaufleitung 22 zum Regenerationsgaserhitzer 13 gemessenen Ist-Temperatur durch ein Regelventil 17 in der Abzweigleitung 16 auf eine Soll-Temperatur eingeregelt wird, die einer optimalen Wärmemenge für die Aufheizung des Regenerationsgases E durch das Wärmeträgergas C1 entspricht.

Die Teilmenge T_{R} an Reingas D für das Regenerationsgas E wird in Stromrichtung des Reingases D nach dem Filter 11 durch den Gas-Booster 12 mit Frequenzumrichter aus dem Reingas D angesaugt, verdichtet und über die Regenerationsgasleitung 24 dem in Regeneration befindlichen Adsorber 9 oder 10 zugeführt.
Nach dem Gas-Booster 12 ist in Stromrichtung der Teilmenge T_{R} des Regenerationsgases E ein Durchflusstransmitter 26 mit Durchflussrechner in die Regenerationsgasleitung 24 eingebunden, der den Volumendurchfluss der Teilmenge T_{R} misst, einen aktuellen Drehzahlwert als Ist-Wert oder einen Drehzahlwert als Festwert aus dem Volumendurchfluss ermittelt und den jeweiligen Wert über eine Steuerleitung 21 der Steuereinheit 15 mitteilt, die diesen Wert dem Frequenzumrichter als Steuergröße vorgibt.
Als Gas-Booster 12 können trockenlaufende (ölfreie), hermetisch dichte Peripheralpumpen mit magnetgekuppeltem Motor und Frequenzumrichter, trockenlaufende Querschieber-Verdichter oder Drehkolben-Verdichter und als Durchflusstransmitter 26, Wirbelstrommesser mit integriertem Durchflussrechner oder Schwebekörpermesser eingesetzt werden.

Das Prozessgas C und das rückgeführte Desorptionsgas F werden in dem gemeinsamen Kühler 6 gekühlt und das durch die Kühlung auskondensierte Wasser im Abscheider 7 aus dem Prozessgas C abgeschieden und durch die Pumpe 8 in die Förderleitung 29 zum Elektrolyseur 1 oder in einen separaten Speicher befördert oder im Abscheider 7 bis zum Abschluss der Regeneration zwischengespeichert.

Für den Fall, dass die regenerative Stromversorgung des Elektrolyseurs 1 abschaltet, werden der Motor des Gas-Boosters 12, ggf. die Pumpe 8, die Steuereinheit 15 und alle Regel- und Schaltventile von einer Brennstoffzellen-Einheit mit etwa 2-20 kWh bis zum Abschluss der Regeneration versorgt. Alternativ können die elektrischen Verbraucher der erfindungsgemäßen Vorrichtung auch von einer USV-Quelle, einem Notstromaggregat oder einem Festnetzanschluss versorgt werden.
Die Brennstoffzelle wird dabei mit einem Teil des vor der Abschaltung der Elektrolyse erzeugten und gespeicherten Wasserstoffs (Reingas) gespeist.

Der innere Strömungsweg K entsteht durch ein Absperren der Reingasleitung 25 zum Verbraucher hin mit dem Schaltventil 58 und ein gleichzeitiges Schließen der Hauptleitung 3a mit dem Regelventil 27, der Abzweigleitung 16 mit dem Regelventil 17 und der Desorptionsgasleitung 30 mit dem Schaltventil 47, wobei die Reingasleitung 25 zur Regenerationsgasleitung 24 hin, die durch die Schaltventile 39, 40, 41, 42 über die Verbindungsleitungen 37, 38 auf Regeneration geschalteten Adsorber 10 bzw. 9, die über die Verbindungsleitung 32 führende Zuführleitung 45, die Nebenleitung 3b über den Nebenreaktor 5a/Wärmespeicher 14, die Vorlaufleitung 22 über den Gas-Gas-Wärmetauscher 13, die Rücklaufleitung 23, die Hauptleitung 3a über den Reaktor 5, die Prozessgasleitung 18 über den Wärmetauscher 6 und Abscheider 7 sowie die durch die Schaltventile 33, 34, 35, 36 über die Verbindungsleitungen 31, 32 auf Adsorption geschalteten Adsorber 9 bzw. 10 zur Reingasleitung 25 offengehalten werden.

Nach dem Abschalten der Stromversorgung des Elektrolyseurs 1 wird die in der Vorrichtung verbliebene Menge an Restgas G solange durch die Adsorber 9 oder 10 im Kreislauf gefahren, bis die Regeneration abgeschlossen ist, wobei die Fahrweise folgende Schritte umfasst:
I Einschalten der Stromversorgung durch die interne/ externe Stromquelle 49, beispielsweise einer Brennstoffzellen-Einheit, und Weiterbetrieb der elektrischen Verbraucher der Vorrichtung, wie Gas-Booster 12, Schalt- und Regelventile 33 bis 36, 39 bis 42, 46, 47, 52, 55 und 58, Steuereinheit 15 und ggf. Pumpe 8,
II Absperren der Reingasleitung 25 zum Verbraucher hin durch das Schaltventil 58 und Bilden des inneren Strömungswegs K,
III Weiterführen der Trocknung/Regeneration durch Fördern der von den Adsorbern 9 oder 10 aus dem in der Vorrichtung verbliebenen Restgas G erzeugten Rein- und Desorptionsgase D und F mit dem Gas-Booster 12 im Saugbetrieb durch den Strömungsweg K, wobei das Rein/Desorptionsgas D/F bis zum Abschluss der Regeneration im Kreislauf umgewälzt und beim Passieren des Wärmespeichers 14 auf eine Temperatur oberhalb der Regenerationstemperatur erhitzt wird,
IV Abzweigen einer Teilmenge an Gas aus der Reingasleitung 25 als Regenerationsgas E und Einstellen dieser Teilmenge durch Messen ihres Volumendurchflusses, Ermitteln eines aktuellen Drehzahlwertes des Gas-Boosters als Ist-Wert oder einen Drehzahlwert als Fest-Wert aus dem gemessenen Volumendurchfluss mit einem in einem Durchflusstransmitter 26 integrierten Durchflussrechner, Übermitteln des ermittelten Wertes an die Steuereinheit 15, die diesen Wert als Steuergröße dem Frequenzumrichter vorgibt,
V Aufheizen der Menge an Regenerationsgas E durch das im Wärmespeicher 14 erhitzte Wärmeträgergas C1 auf Desorptionstemperatur im Gas-Gas Wärmetauscher 13,
VI Einleiten des erhitzten Regenerationsgases E in den jeweils auf Regeneration geschalteten Adsorber 9 oder 10 zur Desorption des adsorbierten Wassers vom Adsorptionsmittel und Rückführen des beladenen Desorptionsgases F über das geöffnete Schaltventil 46 in die Nebenleitung 3b vor dem Nebenreaktor 5a,
VII Aufheizen des rückgeführten Desorptionsgases F im Wärmespeicher 14, Zuführen des erhitzten Desorptionsgases F als Wärmeträgergas C1 zum Gas-Gas-Wärmetauscher 13 und Rückführen des Gases C1 aus dem Gas-Gas-Wärmetauscher 13 über die Rücklaufleitung 23 in Stromrichtung der Hauptmenge Hₘ Gases nach dem Regelventil 27 in die Hauptleitung 3a zum Reaktor 5,
VIII Kühlen der rückgeführten Menge an Gas in den in Stromrichtung des Gases in die Prozessgasleitung 18 eingebundenen Wärmetauscher 6, Abscheiden des auskondensierten Wassers im Abscheider 7 und Abführen des Wassers durch Abpumpen in die Förderleitung 29 zum Elektrolyseur 1 oder in einen separaten Speicher oder Zwischenspeichern des Wassers im Abscheider 7 mit nachfolgendem Abführen des Wassers,
IX Zuführen der den Abscheider 7 verlassenden Menge an Gas zur Adsorption des noch vorhandenen Wassers in dem auf Adsorption geschalteten Adsorber 9 oder 10 und erneutes Entnehmen der Regenerationsgasmenge aus dem Reingas D nach dem Filter 11 durch den Gas-Booster 12 und
X Fortführen der Schritte I bis IX bis die Regeneration abgeschlossen ist.
Die Steuereinheit 15 steuert während des Saugbetriebes die Stellungen aller Ventile entsprechend an.

Die Trocknung und Reinigung des Prozessgases C wird nachfolgend an einem Beispiel näher erläutert.
Ein Volumenstrom von 10.000 Nm³ an Ausgangsgas B soll bei einem Überdruck von 35 bar so behandelt werden, dass das Reingas D einen Restsauerstoffgehalt < 10 ppm V und einen Restwassergehalt < 5 ppm V erreicht. Die Regeneration soll bei mindestens 150 °C mit Silica-Gel als Adsorptionsmittel erfolgen, die Teilmenge an Reingas als Regenerationsgas E etwa 800 Nm³/h betragen und als Speichermedium Duranit-Kugeln verwendet werden.

Folgende Betriebsdaten liegen zugrunde:
1. Einspeisung wasserstoffreiches Gas B:

| | | | |
|---|---|---|---|
| Volumenstrom von B: | ca. | 10.000 | Nm³/h |
| Volumenstrom von A | ca. | 5000 | Nm³/h |
| Druck | ca. | 35 | barü |
| Temperatur | ca. | 55 | °C |
| Sauerstoffgehalt | ca. | 5.000 | ppm V (maximal) |
| Wassergehalt | ca. | 35 | kg/h (gesättigt) |

2. Einspeisung sauerstoffreiches Gas A in den Wärmespeicher

| | | | |
|---|---|---|---|
| Volumenstrom von A | ca. | 6 | Nm³/h |
| Druck | ca. | 35 | barü |
| Temperatur | ca. | 55 | °C |

3. Ausgang am Erhitzer 4

| | | | |
|---|---|---|---|
| Volumenstrom von B | ca. | 10.000 | Nm³/h |
| Druck | ca. | 35 | barü |
| Temperatur | ca. | 65 | °C |
| Wassergehalt | ca. | 35 | kg/h |

4. Ausgang am Reaktor 5

| | | | |
|---|---|---|---|
| Volumenstrom von B | ca. | 9.838 | Nm³/h |
| Volumenstrom von A | | <0,1 | Nm³/h <10 ppm V |
| Druck | ca. | 34,9 | barü |
| Temperatur | ca. | 150-160 | °C |
| Wassergehalt | ca. | 125 | kg/h |

5. Regenerationsgas E -
beim Anfahren oder bei abgeschalteter Elektrolyse

| | | | | |
|---|---|---|---|---|
| Volumenstrom von B | ca. | 800 | Nm³/h | |
| Volumenstrom von A | ca | <0-0,008 | Nm³/h | <10 ppm V |
| Druck | ca. | 35 | barü | |
| Temperatur | ca. | 20-150 | °C | |
| Wassergehalt | ca. | 0-20 | kg/h | |

6. Rücklaufleitung 23 vom Wärmespeicher 14

| | | | | |
|---|---|---|---|---|
| Volumenstrom von B | | 0-600 | Nm³/h | |
| Volumenstrom von A | ca. | 0-0,06 | Nm³/h | <100 ppm V |
| Druck | ca. | 35 | barü | |
| Temperatur | ca. | 65-320 | °C | |
| Wassergehalt | ca. | 17 | kg/h | |

7. Ausgang Kühler 6

| | | | | |
|---|---|---|---|---|
| Volumenstrom von B | ca. | 9.838-10.638 | Nm³/h | |
| Volumenstrom von A | | <0,1 | Nm³/h | <10 ppm V |
| Druck | ca. | 35 | barü | |
| Temperatur | ca. | 10 | °C | |
| Wassergehalt | ca. | 3 | kg/h | |

8. Ausschleusung Kondensat nach Abscheider 7

| | | | |
|---|---|---|---|
| Massestrom | ca. | 125 | kg/h |
| Druck | ca. | 34,8 | barü |
| Temperatur | ca. | 11-20 | °C |

9. Ausgang Adsorber 9 (im Adsorptionszustand)

| | | | |
|---|---|---|---|
| Volumenstrom von B | ca. | 9.838 | Nm³/h |
| Volumenstrom von A | | < 0,1 | Nm³/h <10 ppm V |
| Druck | ca. | 34,7 | barü |
| Temperatur | ca. | 11-20 | °C |
| Wassergehalt | ca. | <5 | ppm V |

Das anfallende Reingas D ist ein hochreines Wasserstoffgas, das den Ansprüchen für die industrielle Nutzung als Gas für die Verwendung in der Petrochemie und in Raffinerien, Brennstoffzellen u.a. vollkommen genügt. Es hat einen Sauerstoffgehalt <10 ppm V und einen Wassergehalt <5 ppm V.

Für andere Anwendungen wie z.B. in der Halbleiterindustrie erfolgt eine intensivere Reinigung auf einen Sauerstoffgehalt von < 1 ppm V und einen Wassergehalt von ebenfalls < 1 ppm V.

**Bezugszeichenliste**

| | |
|---|---|
| Elektrolyseur | 1 |
| Abführleitung für sauerstoffreiches Gas A | 2 |
| Zuführleitung für wasserstoffreiches Gas B | 3 |
| Hauptleitung | 3a |
| Nebenleitung | 3b |
| Erhitzer | 4 |
| Reaktor | 5 |
| Nebenreaktor | 5a |
| Flüssig-Gas-Wärmetauscher (Kühler) | 6 |
| Abscheider | 7 |
| Pumpe | 8 |
| Adsorber | 9, 10 |
| Filter | 11 |
| Gas-Booster | 12 |
| Gas-Gas-Wärmetauscher | 13 |
| Wärmespeicher | 14 |
| Steuereinheit | 15 |
| Abzweigleitung von 2 | 16 |
| Regelventil für Teilmenge T_{S} an Sauerstoffgas | 17 |
| Prozessgasleitung | 18 |
| Einspeiseleitung für regenerativen Strom | 19 |
| Temperatursensor | 20 |
| Steuerleitung | 21 |
| Vorlaufleitung für 13 | 22 |
| Rücklaufleitung von 13 | 23 |
| Regenerationsgasleitung | 24 |
| Reingasleitung | 25 |
| Durchflusstransmitter | 26 |
| Regelventil für Teilmenge T_{R} an Regenerationsgas | 27 |
| Temperatursensor für Regenerationsgas | 28 |
| Förderleitung zum Elektrolyseur 1 | 29 |
| Desorptionsgasleitung | 30 |
| Fußseitige Verbindungsleitungen | 31, 32 |
| Druckgesteuerte Schaltventile | 33, 34, 35, 36 |
| Kopfseitige Verbindungsleitungen | 37, 38 |
| Druckgesteuerte Schaltventile | 39, 40, 41, 42 |
| Schalteinrichtung | 43 |
| Schalter für regenerativen Strom | 44 |
| Zuführleitung zur Nebenleitung 3b | 45 |
| Druckgesteuertes Schaltventil für 45 | 46 |
| Druckgesteuertes Schaltventil für 30 | 47 |
| Schalter für interne/externe Stromquelle | 48 |
| Interne/externe Stromversorgung/ | |
| Brennstoffzellen-Einheit | 49 |
| Puffer | 50 |
| Abzweigleitung | 51 |
| Schaltventil in 51 | 52 |
| Steuerglied von 49 | 53 |
| Zuführleitung | 54 |
| Schaltventil in 54 | 55 |
| Wechselrichter | 56 |
| Stromleitung der Verbraucher | 57 |
| Schaltventil in 25 | 58 |
| Sauerstoffreiches Gas | A |
| Adsorptionskreis | AK |
| Wasserstoffreiches Gas | B |
| Prozessgas | C |
| Wasserstoffreiches Wärmeträgergas | C1 |
| Reingas | D |
| Regenerationsgas | E |
| Desorptionsgas | F |
| Gas aus A, B, C, C1, D und E (Restgas) | G |
| Strömungsweg für Rein- und Desorptionsgas D/F | K |
| Hauptmenge an wasserstoffreichem Gas B | H_{M} |
| Regenerationskreis | R_{K} |
| Nebenmenge an wasserstoffreichem Gas B | T_{L} |
| Teilmenge an sauerstoffreichem Gas A | T_{S} |
| Teilmenge an Reingas D/Regenerationsgas | T_{R} |

## Patentansprüche

1. Verfahren zum Trocknen und Reinigen von Wasserstoff enthaltenden Gasen, die bei der elektrolytischen Wasserspaltung mit elektrischem Strom in Form eines sauerstoffreichen Gases (A) und eines wasserstoffreichen Gases (B) anfallen, welche Reste des jeweils anderen Gases enthalten, bei dem das sauerstoffreiche Gas (A) in die Atmosphäre oder an einen Verbraucher abgeführt, das wasserstoffreiche Gas (B) in einem Erhitzer (4) erwärmt und in einem Reaktor (5) einer exothermen Reaktion unterworfen wird, in der der Restsauerstoff mit dem Wasserstoff zu Wasser in ein heißes feuchtes Prozessgas (C) umgesetzt wird, sodann das Wasser aus diesem Prozessgas (C) unter Überdruck durch Adsorption des Wassers an einem Adsorptionsmittel in einem von mindestens zwei durch Verbindungsleitungen (31,32;37,38) und Schaltventilen (33,34,35,36;39,40,41,42) verbundenen Adsorbern (9, 10) solange entfernt wird bis das Adsorptionsmittel im jeweiligen Adsorber (9, 10) mit Wasser beladen ist, wobei das getrocknete Prozessgas (C) nach Verlassen des jeweiligen Adsorbers (9, 10) über einen Filter (11) als hochreines Wasserstoff-Reingas (D) in einer Reingasleitung (25) zum Verbraucher abgeleitet und das unbehandelte Prozessgas zur Fortführung des Beladungsvorganges auf den unbeladenen Adsorber (9,10) umgelenkt sowie gleichzeitig das beladene Adsorptionsmittel des jeweiligen Adsorbers (9,10) mit einem entgegen der Stromrichtung des in der Beladung befindlichen Adsorbers (9 oder 10) durch eine in einer Regenerationsgasleitung (18) zugeführte, auf Desorptionstemperatur erhitzte Teilmenge (T_{R}) an Reingas (D) als Regenerationsgas (E) regeneriert wird, wobei eine Steuereinheit (15) die Adsorber (9, 10) in Abhängigkeit der Adsorptionsmittelbeladung in die Adsorptionsphase und Regenerationsphase oder umgekehrt umschaltet und alle elektrischen Verbraucher aus der anliegenden elektrischen Stromversorgung über eine Stromleitung gespeist werden, **dadurch gekennzeichnet, dass** das zu trocknende und zu reinigende wasserstoffreiche Gas (B) in eine dem Reaktor (5) zugeführte Hauptmenge (H_{M}) zum Erzeugen des Prozessgases (C) und in eine Nebenmenge (T_{L}) zum Erzeugen eines wasserstoffreichen Wärmeträgergases (C1) in einem Nebenreaktor (5a) aufgeteilt wird, wobei eine abgezweigte Teilmenge (T_{S}) an sauerstoffreichem Gas (A) vor Eintritt in den Nebenreaktor (5a) in die Nebenmenge (T_{L}) zugeführt wird, die entstehende Reaktionswärme in einem Wärmespeicher (14) gespeichert und das Wärmeträgergas (C1) im Wärmespeicher (14) mindestens auf eine Temperatur oberhalb der Regenerationstemperatur erhitzt, anschließend einem Gas-Gas-Wärmetauscher (13) zum Aufheizen des Regenerationsgases (E) zugeführt und nach dem Wärmeaustausch in die Hauptmenge (H_{M}) zurückgeführt wird, und dass ein an die Regenerationsgasleitung (25) angeschlossener Gas-Booster (12) mit Frequenzumrichter die Teilmenge (T_{R}) des Reingases (D) als Regenerationsgas (E) ansaugt und ein Durchflusstransmitter (26) mit integriertem Durchflussrechner den Volumendurchfluss der Teilmenge (T_{R}) durch Ermitteln eines aktuellen Drehzahlwertes des Gas-Boosters (12) als Ist-Wert oder eines Drehzahlwertes als Festwert über die Steuereinheit (15) einstellt, die bei Fortfall der Stromversorgung ein Umschalten aller stromverbrauchenden Aggregate, wie Gas-Booster (12), Steuereinheit (15), Schaltventile (33 bis 36; 39 bis 42; 46; 47; 52; 55; 58), Regelventile (17, 27) und ggf. Pumpe (8), auf eine interne/externe Stromquelle (49) zur temporären Elektroenergieversorgung über die Stromleitung (57) durch eine Schalteinrichtung (43) auslöst, wobei der Gas-Booster (12) einen Saugstrom-Kreislauf des bei Abschaltung der Stromversorgung vorhandenen, aus dem Restgas (G) an den Adsorbern (9, 10) gebildeten Rein- und Desorptionsgases (D,F) bis zum ordnungsgemäßen Abschluss der Regeneration auf einem durch die Gasleitungen (25, 24, 37, 32, 45, 3b, 22, 23, 3a, 18, 31, 38, 25), die Adsorber (9,10), den Gas-Booster (12), den Gas-Gas-Wärmetauscher (13), den Nebenreaktor (5a)/Wärmespeicher (14), den Reaktor (5), den Wärmetauscher (6), Abscheider (7) und Filter (11) führenden inneren Strömungsweg (K) erzeugt, wobei das den auf Regeneration geschalteten Adsorber (9,10) verlassende Desorptionsgas (F) über den Nebenreaktor (5a) im Wärmespeicher (14) erhitzt, dem Gas-Gas-Wärmetauscher (13) als Wärmeträgergas zum Aufheizen des Regenerationsgases (E) auf Desorptionstemperatur zugeführt und anschließend in das wasserstoffreiche Gas vor Eintritt in den Reaktor (5) zurückgeführt wird.

2. Verfahren nach Anspruch 1, **gekennzeichnet durch** folgende Schritte:
a) Aufteilen des wasserstoffreichen Gases (B) in die Hauptmenge (H_{M}), die dem Reaktor (5) zum Erzeugen des Prozessgases (C) über eine Hauptleitung (3a) zugeführt wird, und in eine Nebenmenge (T_{L}), die dem Nebenreaktor (5a) zum Erzeugen eines wasserstoffreichen Wärmeträgergases (C1) über eine Nebenleitung (3b) zugeführt wird,
b) Abzweigen der Teilmenge (Ts) an sauerstoffreichem Gas (A) und Zuführen dieser Teilmenge in die Nebenmenge (T_{L}) gemäß Schritt a) vor Eintritt in den Nebenreaktor (5a),
c) Einstellen der Temperatur des Wärmeträgergases (C1) durch Regeln der Zufuhr der Teilmenge (T_{S}) an sauerstoffreichem Gas (A) in die Teilmenge (T_{L}) des wasserstoffreichen Gases (B),
d) Zuführen der Nebenmenge (T_{L}) des wasserstoffreichen Gases (B) und der Teilmenge (T_{S}) des sauerstoffreichen Gases (A) in den Nebenreaktor (5a) zum Erzeugen des Wärmeträgergases (C1), Speichern der Reaktionswärme im Wärmespeicher (14) und Aufheizen des Wärmeträgergases (C1) auf eine Temperatur, die größer als die Regenerationstemperatur ist,
e) Weiterleiten des aufgeheizten Wärmeträgergases (C1) über eine Vorlaufleitung (22) in den Gas-Gas-Wärmetauscher (13) zum Durchführen eines Gas-Gas-Wärmetauschs zwecks Aufheizen des Regenerationsgases auf Desorptionstemperatur und Rückführen des wärmeentkoppelten Wärmeträgergases (C1) über eine Rücklaufleitung (23) in die Hauptmenge (H_{M}) des wasserstoffreichen Gases (B) führende Hauptleitung (3a),
f) Einstellen der Temperatur des Regenerationsgases (E) durch Regeln der Zufuhr der Nebenmenge (T_{L}) gemäß Schritt a) in den Nebenreaktor (5a) und den Wärmespeicher (14) zum Erhitzen des Regenerationsgases (E) auf Desorptionstemperatur,
g) Kühlen des heißen Prozessgases (C), Abscheiden des beim Kühlen auskondensierten Wassers und Abpumpen des Wassers in die Förderleitung (29) des Elektrolyseurs 1 oder
in einen separaten Speicher oder Zwischenspeichern des Wassers im Abscheider (7) mit nachfolgendem Abführen des Wassers,
h) Abzweigen der Teilmenge (TR) an Reingas D als Regenerationsgas (E) und Einstellen dieser Teilmenge durch Regeln des Volumendurchflusses an Regenerationsgas (E) in die Adsorber (9 oder 10),
m) Einleiten des erhitzten Regenerationsgases (E) nach Schritt f) in den auf Regeneration geschalteten Adsorber (9, 10) zur Desorption des adsorbierten Wassers vom Adsorptionsmittel und
n) Rückführen des beladenen Desorptionsgases (F) in das heiße Prozessgas (C) vor dem Kühlen gemäß Schritt g) oder in das wasserstoffreiche Gas B vor Eintritt in den Nebenreaktor (5a).

3. Verfahren nach Anspruch 1 oder 2, **dadurch gekennzeichnet, dass** die Teilmenge (T_{S}) an sauerstoffreichem Gas (A) in Abhängigkeit einer von einem Temperatursensor (20) in der Vorlaufleitung (22) gemessenen Ist-Temperatur des Wärmeträgergases (C1) durch ein mit der Steuereinheit (15) kommunizierendes Regelventil (17) in einer Abzweigleitung (16) auf eine Soll-Temperatur eingeregelt wird, die einer optimalen Wärmemenge für die Aufheizung des Regenerationsgases (E) durch das Wärmeträgergas (C1) entspricht.

4. Verfahren nach Anspruch 1, **dadurch gekennzeichnet, dass** die Temperatur des Regenerationsgases (E) in Abhängigkeit einer von einem Temperatursensor (28) in der Regenerationsgasleitung (24) in Stromrichtung hinter dem Gas-Gas-Wärmetauscher (13) gemessenen Ist-Temperatur durch ein mit der Steuereinheit (15) kommunizierendes Regelventil (27) auf eine der Desorptionstemperatur entsprechende Soll-Temperatur eingeregelt wird, die einer ausreichenden Wärmemenge zum Erhitzen des Regenerationsgases auf Desorptionstemperatur entspricht.

5. Verfahren nach Anspruch 1, **dadurch gekennzeichnet, dass** der innere Strömungsweg (K) gebildet wird durch:
a) ein Absperren der Reingasleitung (25) mit dem Schaltventil (58) zum Verbraucher hin und ein Schließen der Hauptleitung (3a) mit dem Regelventil (27), der Abzweigleitung (16) mit dem Regelventil (17) und der Desorptionsgasleitung (30) mit dem Schaltventil (47) und
b) ein Offenhalten der Reingasleitung (25) zur Regenerationsgasleitung (24), des durch die Schaltventile (39,40,41,42) über die Verbindungsleitungen (37,38) auf Regeneration geschalteten Adsorbers (10,9), der über die Verbindungsleitung (32) führenden Zuführleitung (45), der Nebenleitung (3b), über den Nebenreaktor (5a)/Wärmespeicher (14), der Vorlaufleitung (22) über den Gas-Gas-Wärmetauscher (13), der Rücklaufleitung (23), der Hauptleitung (3a) über den Reaktor (5), der Prozessgasleitung (18) über den Wärmetauscher (6) und Abscheider (7) sowie des durch die Schaltventile (33,34,35,36) über die Verbindungsleitungen (31,32) auf Adsorption geschalteten Adsorbers (9,10) über die Reingasleitung (25) zurück in die Regenerationsgasleitung (24).

6. Verfahren nach Anspruch 1, **dadurch gekennzeichnet, dass** nach dem Abschalten der Stromversorgung die verbliebene Menge an Restgas (G) solange durch die Adsorber (9 oder 10) im Kreislauf gefahren wird, bis die Regeneration abgeschlossen ist, wobei die Fahrweise folgende Schritte umfasst:
I Einschalten der Stromversorgung durch die interne/ externe Stromquelle (49), beispielsweise einer Brennstoffzellen-Einheit, und Weiterbetrieb der elektrischen Verbraucher, wie Gas-Booster (12), Schalt- und Regelventile (33 bis 36, 39 bis 42, 46, 47, 52, 55 und 58), Steuereinheit (15) und ggf. Pumpe (8),
II Absperren der Reingasleitung (25) zum Verbraucher hin durch das Schaltventil (58) und Bilden des inneren Strömungswegs,
III Weiterführen der Trocknung/Regeneration durch Fördern der von den Adsorbern (9 oder 10) aus dem verbliebenen Restgas (G) erzeugten Rein- und Desorptionsgase (D und F) mit dem Gas-Booster (12) im Saugstrom-Kreislauf durch den Strömungsweg (K), wobei das
Rein/Desorptionsgas (D/F) bis zum Abschluss der Regeneration im Kreislauf umgewälzt und beim Passieren des Wärmespeichers (14) auf eine Temperatur oberhalb der Regenerationstemperatur erhitzt wird,
IV Abzweigen einer Teilmenge (T_{R}) an Gas aus der Reingasleitung (25) als Regenerationsgas (E) und Einstellen dieser Teilmenge durch Messen ihres Volumendurchflusses, Ermitteln eines aktuellen Drehzahlwertes des Gas-Boosters (12) als Ist-Wert oder einen Drehzahlwert als Fest-Wert aus dem gemessenen Volumendurchfluss mit dem in den Durchflusstransmitter (26) integrierten Durchflussrechner, Übermitteln des ermittelten Wertes an die Steuereinheit (15), die diesen Wert als Steuergröße dem Frequenzumrichter vorgibt,
V Aufheizen der Menge an Regenerationsgas (E) durch das im Wärmespeicher (14) erhitzte Wärmeträgergas (C1) auf Desorptionstemperatur im Gas-Gas Wärmetauscher (13),
VI Einleiten des erhitzten Regenerationsgases (E) in den jeweils auf Regeneration geschalteten Adsorber (9 oder 10) zur Desorption des adsorbierten Wassers vom Adsorptionsmittel und Rückführen des beladenen Desorptionsgases (F) über das geöffnete Schaltventil (46) in die Nebenleitung (3b) vor dem Nebenreaktor (5a),
VII Aufheizen des rückgeführten Desorptionsgases (F) im Wärmespeicher (14), Zuführen des erhitzten Desorptionsgases (F) als Wärmeträgergas (C1) zum Gas-Gas-Wärmetauscher (13) und Rückführen des Gases (C1) aus dem Gas-Gas-Wärmetauscher (13) über die Rücklaufleitung (23) in Stromrichtung der Hauptmenge (Hₘ) nach dem Regelventil (27) in die Hauptleitung (3a) zum Reaktor (5),
VIII Kühlen der rückgeführten Menge an Gas in den in Stromrichtung des Gases in die Prozessgasleitung (18) eingebundenen Wärmetauscher (6), Abscheiden des auskondensierten Wassers im Abscheider (7) und Abführen des Wassers durch Abpumpen in die Förderleitung (29) zum Elektrolyseur (1) oder in einen separaten Speicher oder Zwischenspeichern des Wassers im Abscheider (7) mit nachfolgendem Abführen des Wassers,
IX Zuführen der den Abscheider (7) verlassenden Menge an Gas zur Adsorption des noch vorhandenen Wassers in dem auf Adsorption geschalteten Adsorber (9 oder 10) und erneutes Entnehmen der Regenerationsgasmenge aus dem Reingas (D) nach dem Filter (11) durch den Gas-Booster 12 und
X Fortführen der Schritte I bis IX bis die Regeneration abgeschlossen ist.

7. Verfahren nach Anspruch 1, **dadurch gekennzeichnet, dass** als Gas-Booster (12) eine trockenlaufende, hermetisch dichte Peripheralradpumpe mit magnetgekuppelten Motor oder ein trockenlaufender Drehschieberverdichter oder ein Drehkolbenverdichter eingesetzt wird.

8. Verfahren nach Anspruch 1, **dadurch gekennzeichnet, dass** als Durchflusstransmitter (26) ein Wirbelstrommesser mit integrierten Durchflussrechner oder Schwebekörpermesser verwendet wird.

9. Verfahren nach Anspruch 1, **dadurch gekennzeichnet, dass** als interne/externe Stromquelle (49) eine Brennstoffzellen-Einheit und/oder USV-Quelle und/oder ein Notstromaggregat und/oder ein Festnetzanschluss verwendet wird.

10. Verfahren nach Anspruch nach Anspruch 8, **dadurch gekennzeichnet, dass** die Brennstoffzellen-Einheit bis zum Abschluss der Regeneration mit zuvor erzeugtem, in einem Puffer (50) gespeicherten Wasserstoff-Reingas (D) betrieben wird.

11. Verfahren nach Anspruch 9, **dadurch gekennzeichnet, dass** die Brennstoffzellen-Einheit bis zum Abschluss der Regeneration mit Wasserstoff aus einem separaten Wasserstoff-Speicher betrieben wird.

12. Verfahren nach Anspruch 1, **dadurch gekennzeichnet, dass** als Adsorptionsmittel Silica-Gel, Molekularsiebe oder Aluminiumoxid-Gel verwendet wird.

13. Vorrichtung zum Trocknen und Reinigen von Wasserstoff enthaltenden Gasen, die bei der elektrolytischen Wasserspaltung in Form eines sauerstoffreichen Gases (A) und eines wasserstoffreichen Gases (B) anfallen, welche Reste des jeweils anderen abgetrennten Gases enthalten, mit einer an die Einspeiseleitung (19) angeschlossenen Stromleitung (57) zur Versorgung aller Verbraucher der Vorrichtung mit Strom, einer Abführleitung (2) für das sauerstoffreiche Gas (A) in die Atmosphäre oder zum Verbraucher und einer Zuführleitung (3) für das wasserstoffreiche Gas (B), mit einem Erhitzer (4) zum Erwärmen des wasserstoffreichen Gases (B), einem Reaktor (5) zur Umsetzung von Restsauerstoff und Wasserstoff unter Bildung von Wasser an einem Katalysator zu einem heißen Prozessgas (C), mindestens zwei mit Adsorptionsmittel befüllte Adsorber (9,10), die über Verbindungsleitungen (31,32;37,38) und Schaltventile (33,34,35,36;39,40,41,42) bei Überdruck in den Adsorptions- und Regenerationszustand und umgekehrt über eine Steuereinheit (15) umschaltbar angeordnet sind und die zwei voneinander unabhängige Adsorptionskreise (AK, RK) bilden, wobei die Adsorber (9,10) mit dem Reaktor (5) über eine Prozessgasleitung (18) in Verbindung stehen, die das Prozessgas (C) zur Adsorption des Wassers in die Adsorber (9,10) leitet, und die Adsorber (9,10) über einen Filter (11) und eine kopfseitige, mit einem Schaltventil (58) absperrbare Reingasleitung (25) zur Ableitung des getrockneten Prozessgases als hochreines Reingas (D) zum Verbraucher verbunden sind, und die Adsorber (9,10) kopfseitig mit einer von der Reingasleitung (25) nach dem Filter (11) abzweigenden Regenerationsgasleitung (24) zum Entnehmen einer Teilmenge (T_{R}) des Reingases (D) als Regenerationsgas (E) in einen Regenerationsgaserhitzer und fußseitig mit einer Desorptionsgasleitung (30) zum Ableiten des mit Wasser beladenen Desorptionsgases (F) entgegen der Stromrichtung des Prozessgases (C) des auf Adsorption geschalteten Adsorbers (9,10) verbunden sind, **dadurch gekennzeichnet, dass** die Zuführleitung (3) in eine Hauptleitung (3a) zum Zuführen einer Hauptmenge (H_{M}) an wasserstoffreichem Gas (B) in den Reaktor (5) und in eine, von einer Abzweigleitung (16) für eine Teilmenge (T_{S}) an sauerstoffreichem Gas (A) einbindende Nebenleitung (3b) zum Zuführen einer mit der Teilmenge (T_{S}) an sauerstoffreichem Gas (A) angereicherten Nebenmenge (T_{L}) an wasserstoffreichem Gas (B) in einen Nebenreaktor (5a) zum Erzeugen eines wasserstoffreichen Wärmeträgergases (C1) aufgeteilt ist, wobei in der Regenerationsgasleitung (24) als Regenerationsgaserhitzer ein Gas-Gas-Wärmeaustauscher (13) vorgesehen ist, dem ein Wärmespeicher (14) zugeordnet ist, welcher durch die Reaktionswärme aus der Umsetzung von Sauerstoff und Wasserstoff im Nebenreaktor (5a) aus der mit der Teilmenge (T_{S}) an sauerstoffreichem Gas (A) angereicherten Nebenmenge (T_{L}) an wasserstoffreichem Gas (B) gespeist ist und das den Nebenreaktor (5a) verlassende Wärmeträgergas (C1) im Wärmespeicher (14) auf eine Temperatur oberhalb der Regenerationstemperatur erhitzt, und dass an die Regenerationsgasleitung (24) in Strömungsrichtung vor dem Gas-Gas-Wärmetauscher (13) ein Gas-Booster (12) mit Frequenzumrichter zum Ansaugen der Teilmenge (T_{R}) des Reingases (D) und ein
Durchflusstransmitter (26) mit integriertem Durchflussrechner zum Ermitteln eines aktuellen Drehzahlwertes des Gas-Boosters (12) als Ist-Wert oder eines Drehzahlwertes als Festwert für den Volumendurchfluss an Regenerationsgas angeschlossen ist, wobei der Durchflusstransmitter (26) mit dem Frequenzumrichter und der Steuereinheit (15) in Verbindung steht, die bei Fortfall der Stromversorgung alle stromverbrauchenden Aggregate, wie Gas-Booster (12), Steuereinheit (15), Schaltventile (33 bis 36; 39 bis 42; 46; 47; 52; 55; 58), Regelventile (17, 27) und ggf. Pumpe (8), auf eine interne/externe Stromquelle (49) zur temporären Elektroenergieversorgung über die Stromleitung mit einer Schalteinrichtung (43) umschaltet, wobei der Gas-Booster (12) einen Saugstrom-Kreislauf aus dem bei Abschaltung der Stromversorgung in der Vorrichtung vorhandenen Restgas (G) an den Adsorbern (9, 10) gebildeten Rein- und Desorptionsgas (D,F) auf einem durch die Gasleitungen (25, 24, 37, 32, 45, 3b, 22, 23, 3a, 18, 31, 38, 25), den Adsorbern (10,9), dem Nebenreaktor (5a)/Wärmespeicher (14), dem Gas-Gas-Wärmetauscher (13), dem Reaktor (5), den Wärmetauscher (6), Abscheider (7) und den Filter (11) gebildeten inneren Strömungsweg (K) bis zum Abschluss der Regeneration aufrechterhält.

14. Vorrichtung nach Anspruch 13, **dadurch gekennzeichnet, dass** der Nebenreaktor (5a) und der Wärmespeicher (14) eine gemeinsame oder separate Baueinheit bilden, wobei der Nebenreaktor (5a) für die Nebenmenge (T_{L}) des wasserstoffreichen Gases (B) und die Teilmenge (T_{S}) des sauerstoffreichen Gases (B) ausgelegt ist und der Wärmespeicher (14) eine dem Nebenreaktor (5a) nachgeordneten Schüttung aus Duranit-Kugeln zur Speichern der Reaktionswärme umfasst.

15. Vorrichtung nach Anspruch 13 oder 14, **dadurch gekennzeichnet, dass** die Abführleitung (2) für das sauerstoffreiche Gas (A) mit der Abzweigleitung (16) verbunden ist, die zum Ableiten der Teilmenge (T_{S}) dieses Gases in die Nebenleitung (3b) für das wasserstoffreiche Gas (B) vor Eintritt in den Nebenreaktor (5a) mündet, wobei eine Vorlaufleitung (22) zum Gas-Gas-Wärmetauscher (13) mit einem Temperatursensor (20) zur Messung einer Ist-Temperatur des Wärmeträgergases (C1) und die Abzweigleitung (16) für das sauerstoffreiche Gas (A) mit einem temperaturgesteuerten Regelventil (17) versehen ist, welches die Teilmenge (T_{S}) an sauerstoffreichem Gas (A) in der Nebenmenge (T_{L}) des anderen Gases (B) in Abhängigkeit der ermittelten Ist-Temperatur auf eine Solltemperatur bestimmt, die einer optimalen Wärmemenge zum Aufheizen des Wärmeträgergases (C1) entspricht.

16. Vorrichtung nach Anspruch 13, **dadurch gekennzeichnet, dass** von der Zuführleitung (3) die Hauptleitung (3a) zum Zuführen der Hauptmenge (H_{M}) an vorgewärmtem wasserstoffreichen Gas (B) in den Reaktor (5) zum Erzeugen des Prozessgases (C) und die Nebenleitung (3b) zum Zuführen der mit der Teilmenge (T_{S}) an sauerstoffreichem Gas (A) angereicherten Nebenmenge (T_{L}) des vorgewärmten wasserstoffreichen Gases (B) in den dem Wärmespeicher (14) zugeordneten Nebenreaktor (5a) zum Erzeugen des wasserstoffreichen Wärmeträgergases (C1) abzweigt, wobei der Wärmespeicher (14) mit dem Gas-Gas-Wärmetauscher (13) über die Vorlaufleitung (22) verbunden ist, eine Rücklaufleitung (23) vom Gas-Gas-Wärmetauscher (13) in die Hauptleitung (3a) zurückführt, die Regenerationsgasleitung (24) mit einem Temperatursensor (28) zur Messung der Ist-Temperatur des Regenerationsgases (E) versehen ist, die Hauptleitung (3a) in Stromrichtung vor der Rücklaufleitung (23) ein temperaturgesteuertes Regelventil (27) aufweist, welches die Temperatur der Hauptmenge (H_{M}) an wasserstoffreichem Gas (B) in Abhängigkeit einer vom Temperatursensor (28) ermittelten Ist-Temperatur auf eine Soll-Temperatur bestimmt, die einer ausreichenden Wärmemenge zum Erhitzen des Regenerationsgases auf Desorptionstemperatur entspricht.

17. Vorrichtung nach Anspruch 13, **dadurch gekennzeichnet, dass** der Gas-Booster (12) eine trockenlaufende, hermetisch dichte Peripheralradpumpe mit magnetgekuppeltem Antrieb, ein Drehschieber-Verdichter oder ein Drehkolben-Verdichter ist.

18. Vorrichtung nach Anspruch 13, **dadurch gekennzeichnet, dass** der Durchflusstransmitter (26) ein Wirbelstrommesser mit integriertem Durchflussrechner oder ein Schwebekörpermesser ist.

19. Vorrichtung nach Anspruch 13, **dadurch gekennzeichnet, dass** die interne/externe Stromquelle (49) eine Brennstoffzellen-Einheit und/oder USV-Quelle und/oder ein Notstromaggregat und/oder ein Festnetzanschluss ist.

20. Vorrichtung nach Anspruch 13 oder 19, **dadurch gekennzeichnet, dass** ein Puffer (50) zur Speicherung von zuvor erzeugtem Reingas (D) vorgesehen ist, der einerseits über eine durch ein Schaltventil (52) in die Offen- und Schließlage bringende Abzweigleitung (51) mit der Reingasleitung (25) verbunden ist und andererseits mit der Brennstoffzellen-Einheit (49) über eine durch ein Schaltventil (55) öffnende oder schließende Zuführleitung (54) zum Zuführen des gespeicherten Reingases (D) in die Brennstoffzellen-Einheit (49) in Verbindung steht.

21. Vorrichtung nach Anspruch 19, **dadurch gekennzeichnet, dass** ein separater Wasserstoff-Speicher vorgesehen ist, der mit der Brennstoffzellen-Einheit (49) über die durch das Schaltventil (55) in die Offen- oder Schließlage bringenden Zuführleitung (54) zum Zuführen von Wasserstoff in die Brennstoffzellen-Einheit (49) in Verbindung steht.

22. Vorrichtung nach Anspruch 13, **dadurch gekennzeichnet, dass** die Brennstoffzellen-Einheit (49) ein internes mit der Steuereinheit (15) verbundenes Steuerglied (53) aufweist, das mit einer Schalteinrichtung (43) verbunden ist, die die Brennstoffzellen-Einheit (49) von der Einspeiseleitung (19) der Stromversorgung trennt oder mit dieser verbindet.

23. Vorrichtung nach Anspruch 13, **dadurch gekennzeichnet, dass** der Gas-Booster (12) und ggf. die Pumpe (8) über einen Wechselrichter (56) mit der Brennstoffzellen-Einheit (49) elektrisch verbunden sind.

24. Vorrichtung nach Anspruch 13, **dadurch gekennzeichnet, dass** der innere Strömungsweg (K) aus der bei Stromausfall durch das Regelventil (27) geschlossener Hauptleitung (3a), durch das Regelventil (17) geschlossener Abzweigleitung (16) und durch das Schaltventil (47) geschlossener Desorptionsgasleitung (30) von der Prozessgasleitung (18) über den Wärmetauscher (6), Abscheider (7) und den durch die Schaltventile (33 bis 36) auf Adsorption geschalteten Adsorber (9), einen durch ein Schaltventil (58) zum Verbraucher hin geschlossenen, aber zur Regenerationsgasleitung offenen gehaltenen Abschnitt der Reingasleitung (25), der Regenerationsgasleitung (24) über den durch die Schaltventile (39 bis 42) auf Regeneration geschalteten Adsorber (10), einen Abschnitt der Desorptionsgasleitung (30), der Zuführleitung (45) zur Nebenleitung (3b) über den Nebenreaktor (5a) und Wärmespeicher (14), der Vorlaufleitung (22), den Gas-Gas-Wärmetauscher (13), der in die Hauptleitung (3a) einbindenden Rücklaufleitung (23) über den Reaktor (5) zurück in die Prozessgasleitung (18) gebildet ist.

25. Vorrichtung nach Anspruch 13, **dadurch gekennzeichnet, dass** in die Prozessgasleitung (18) ein Wärmetauscher (6) zum Kühlen des Prozessgases (C)/Desorptionsgases (F) und ein Abscheider (7) zum Abscheiden des auskondensierten Wassers hintereinander in Stromrichtung des Prozessgases (C) integriert sind, wobei der Abscheider (7) über eine Pumpe (8) zum Fördern des auskondensierten Wassers in den Elektrolyseur (1) oder in einen Speicher in Verbindung steht.

26. Vorrichtung nach Anspruch 13, **dadurch gekennzeichnet, dass** die Desorptionsgasleitung (30) in Stromrichtung des Prozessgases (C) nach dem Reaktor (5) in die Prozessgasleitung (18) eingebunden ist.

27. Vorrichtung nach Anspruch 13, **dadurch gekennzeichnet, dass** der Gas-Booster (12), die Pumpe (8), die Regelventile (17,27), die Schaltventile (33 bis 36, 39 bis 42, 46, 47, 52, 55, 58) und die Steuereinheit (15) mit der internen/externen Stromquelle (49), beispielsweise Brennstoffzellen-Einheit und/oder USV-Quelle und/oder Notstromaggregat oder einem Festnetzanschluss zum Versorgen mit Strom verbunden sind.

28. Vorrichtung nach Anspruch 13, **dadurch gekennzeichnet, dass** die Adsorber (9,10) mit Silica-Gel, Molekular-Siebe oder Aluminiumoxid-Gel als Adsorptionsmittel für Wasser befüllt sind.

## Claims

1. Method for drying and purifying hydrogen-containing gases that arise during electrolytic water splitting with electric current in the form of an oxygen-rich gas (A) and a hydrogen-rich gas (B), which contain residues of the other gas, the oxygen-rich gas (A) is discharged into the atmosphere or to a consumer, the hydrogen-rich gas (B) is heated in a heater (4) and subjected to an exothermic reaction in a reactor (5) in which the residual oxygen and the hydrogen are converted into water and a hot, moist process gas (C) is formed, then the water from this process gas (C) is removed under excess pressure by adsorption of the water on an adsorbent in at least two through connecting pipes (31,37;38) and switching valves (33,34,35,36;39,40,41,42) connected adsorbers (9,10) until the adsorbent is loaded with water in the respective adsorber (9,10), after leaving the respective adsorber (9,10) the dried process gas (C) is diverted to the consumer via a filter (11) as high-purity hydrogen clean gas (D) in a clean gas pipe (25) and the untreated process gas is transferred to the unloaded adsorber (9,10) for continuing of the loading and at the same time the loaded adsorbent is regenerated by a partial quantity (TR) of the clean gas (D) as regeneration gas (E) which is heated to desorption temperature and the heated gas is fed in a regeneration gas pipe (24) counter to the direction of the flow of the respective adsorber (9,10) that is currently being loaded, wherein a control unit (15) switches the adsorber (9,10) into the adsorption phase and regeneration phase or vice versa depending on the loading of the adsorbent and all electrical users are supplied with electricity from the connected power supply via a power line (5) **characterized in that** the hydrogen-rich gas (B) to be dried and cleaned is divided into a main quantity (HM) fed to the reactor (5) for generating the process gas (C) and a secondary quantity (TL) for generating a hydrogen-rich heat carrier gas (C1) in a secondary reactor (5a), wherein a branched off partial quantity (TS) of oxygen-rich gas (A) is supplied into the secondary quantity (TL) before entering the secondary reactor (5a), the resulting heat of reaction is stored in a heat accumulator (14) and the heat carrier gas (C1) is heated to at least a temperature above the regeneration temperature in the heat accumulator (14), than the heated carrier gas (C1) is fed to a gas-gas heat exchanger (13) for heating the regeneration gas (E) and returned to the main quantity (HM) after the heat exchange, and that a gas-booster (12) with frequency converter, which is connected to the regeneration gas pipe (25), sucks in the partial quantity (TR) of the clean gas (D) as regeneration gas (E) and a flow transmitter (26) with an integrated flow computer adjusts the volume flow of the partial quantity (TR) by determining a current rotational speed value of the gas-booster (12) as an actual value or as a fixed value via the control unit (15), which, if the power supply fails, triggers by a switching device (43) a switchover of all electrical power consumer units such as gas-booster (12), control unit (15), switching valves (33 to 36; 39 to 42; 46; 52; 58), control valves (17,27) and if necessary the pump (8), to an internal/external power source (49) for temporary electrical energy supply via the power line (5), wherein until the end of the regeneration the gas-booster (12) generates a suction flow circulation of the residual gas (G) that is present when the device switched off on the adsorber (9,10) forming clean and desorption gas (D,F), through an internal flow path (K) that passes through the gas pipes (25, 24, 37, 32, 45, 3b, 22, 23, 3a, 18, 31, 38, 25), the adsorber (9,10), the gas-booster (12), the gas-gas heat exchanger (13), the secondary reactor (5a)/heat accumulator (14), the reactor (5), the heat
exchanger (6), separator (7) und filter (11), the regeneration gas (F) leaving the adsorber (9,10) switched to the regeneration, is heated via the secondary reactor (5a) in the heat accumulator (14), the heated gas is fed to the gas-gas heat exchanger (13) as heat carrier gas for heating the regeneration gas (E) to desorption temperature, and then the heat carrier gas is fed back into the hydrogen-rich gas before entry to the reactor (5).

2. Method according to claim 1, **characterized by** following steps:
a) dividing the hydrogen-rich gas (B) into the main quantity (HM), which is fed to the reactor (5) for generating the process gas (C) via a main pipe (3a), and into a secondary quantity (TL), which is fed to the secondary reactor (5a) for generating a hydrogen-rich heat carrier gas (C1) via a secondary pipe (3b),
b) branching off the partial quantity (TS) of oxygen-rich gas (A) and feeding this partial quantity into the secondary quantity (TL) according to step a) before entering the secondary reactor (5a),
c) Setting the temperature of the heat carrier gas (C1) by regulating the supply of the partial quantity (TS) of oxygen-rich gas (A) into the partial quantity (TL) of the hydrogen-rich gas (B),
d) feeding the secondary quantity (TL) of the hydrogen-rich gas (B) and the partial quantity (TS) of the oxygen-rich gas (A) into the secondary reactor (5a) for generating the heat carrier gas (C1), storing the heat of reaction in the heat accumulator (14) and heating up the heat carrier gas (C1) to a temperature that is higher than the regeneration temperature,
e) forwarding the heat carrier gas (C1) via an advance pipe (22) into the gas-gas heat exchanger (13) to carry out a gas-gas heat exchange for the purpose of heating the regeneration gas to the desorption temperature and returning the heat-decoupled heat carrier gas (C1) in the main quantity (HM) of the hydrogen-rich gas (B) via a return pipe (23) that leads into the main pipe (3a),
f) setting the temperature of the regeneration gas (E) by regulating of the secondary quantity (TL) according to step a) into the secondary reactor (5a) and the heat accumulator (14) for heating the regeneration gas (E) to the desorption temperature,
g) cooling the hot process gas (C), separating the water that has condensed during cooling and pumping the water into the delivery pipe (29) of the electrolyzer (1) or into a separate storage or intermediate storage in the separator (7) with subsequent removal of the water,
h) branching off the partial quantity (TR) of clean gas (D) as regeneration gas (E) and setting and adjusting this partial quantity by regulating the volume flow of regeneration gas (E) into the adsorber (9,10),
m) introducing the heated regeneration gas (E) after step f) into the adsorber (9,10), which is switched to regeneration, for desorption of the adsorbed water from the adsorbent and
n) recirculation of the loaded desorption gas (F) into the hot process gas (C) before cooling according to step g) or into the hydrogen-rich gas (B) before entering the secondary reactor (5a).

3. Method according to claim 1 or 2, **characterized in that** the partial quantity (TS) of oxygen-rich gas (A) is regulated by a regulating valve (17) in a branch pipe (16) to a target temperature which corresponds to an optimal amount of heat for heating the regeneration gas (E) as a function of an actual temperature of the heat carrier gas (C1) measured in the advance pipe (22) by a temperature sensor (20) connected to the control unit (15) that communicates with the regulating valve (17).

4. Method according to claim 1, **characterized in that** the temperature of the regeneration gas (E) is regulated by a regulating valve (27) to a target temperature corresponding to the desorption temperature, which corresponds to a sufficient amount of heat for heating the regeneration gas to the desorption temperature as a function of an actual temperature measured in the regeneration gas pipe (24) downstream of the gas-gas heat exchanger (13) in direction of the flow by a temperature sensor (28) connected to the control unit (15) that communicates with the regulating valve (27),

5. Method according to claim 1, **characterized in that** the inner flow path (K) is formed by:
a) turn off the clean gas pipe (25) with the switching valve (58) to the consumer and closing the main pipe (3a) with the regulating valve (27), closing the branch pipe (16) with the control valve (17) and the desorption gas pipe (30) with the switching valve (4)),
b) keeping open the clean gas pipe (25) to the regeneration gas pipe (24), the adsorber (9,10) switched to regeneration by the switching valves (39,40,41,42) via the connecting pipes (37,38), the feed pipe (45) that leads over the connecting pipe (32), the secondary pipe (3a), the secondary reactor (5a)/ accumulator (14), the advanced pipe (22) via the gas-gas heat exchanger (13), the return pipe (23), the main pipe (3a) via the reactor (5), the process gas pipe (18) via the heat exchanger (6), the separator (7) and the adsorber (9,10) which is switched to adsorption by the switching valves (33,34,35,36) via the connecting pipes (31,321, via the clean gas pipe (25) back into the regeneration gas pipe (24).

6. Method according to claim 1, **characterized in that** after the electrical power supply has been switched off, the remaining quantity of residual gas (G) is circulated through the adsorber (9,10) until the regeneration is complete, the operation comprising the following steps:
I switching on the power supply by the internal/external electrical power source, for example a fuel cell unit, and continued operation of the electrical consumers, such as gas-booster (12), switching and control valves (33 to 36, 39 to 42, 46, 47, 52, 55 and 58), control unit (15) and if necessary pump (8,
II turn off the clean gas pipe (25) to the consumer by the switching valve (48) and creating the inner flow path,
III continuing the drying/regeneration by conveying the clean and desorption gases (D and F) generated by the Adsorbers (9 or 10) from the remaining residual gas (G) with the gas-booster (12) in a suction flow circuit through the flow path (K), whereby the clean/desorption gas (D,F) is heated to a temperature above the regeneration temperature when flowing through the accumulator (14) and is circulated in the circuit until the regeneration is complete.
IV branching off a partial quantity (TR) of gas from the clean gas pipe (25) as regeneration gas (E) and adjusting this partial quantity by measuring its volume flow, determining a current rotational speed value of the gas-booster (12) as an actual value or as a fixed speed value from the measured volume flow with the flow computer integrated in the flow transmitter (26), transmitting of the determined value to the control unit (15), which specifies this value as a control variable for the frequency converter,
V heating up of the quantity of regeneration gas (E) by the heat carrier gas (C1) to the desorption temperature in the gas-gas heat exchanger (13),
VI introducing the heated regeneration gas (E) into the adsorber (9 or 10), which is switched to regeneration, for desorption of the adsorbed water from the adsorbent and returning the loaded desorption gas (F) via the open switching valve (46) into the secondary pipe (3b) upstream of the secondary reactor (5a),
VII heating up of the recirculated desorption gas (F) in the accumulator (14), and feeding the heated desorption gas (F) as heat carrier gas (C1) to the gas-gas heat exchanger (13) and recirculation of the gas (C1) from the gas-gas heat exchanger (13) back to the reactor (5) via the return pipe (23) in the direction of the flow of the main quantity (HM) downstream the regulating valve (27) into the main pipe (3a),
VIII cooling of the recirculated quantity of gas in the heat exchanger (6) integrated into the process gas pipe (18) in flow direction of the gas, separating of the condensed water in the separator (7) and removal of the water by pumping it into the delivery pipe (29) to the electrolyzer (1) or in a separate storage or temporary storage of the water in the separator (7) with subsequent discharge of the water,
IX feeding of the amount of gas leaving the separator (7) for adsorption of the water still present in the adsorber (9 or 10) switched to adsorption and renewed removal of the amount of regeneration gas from the clean gas (D) downstream the filter (11) by the gas-booster (12) and
X continue steps I to IX until regeneration is complete.

7. Method according to claim 1, **characterized in that** a dry-running, hermetically sealed peripheral impeller pump with a magnetically coupled drive or a dry-running rotary vane compressor or a rotary piston compressor is used as the gas-booster (12).

8. Method according to claim 1, **characterized in that** an eddy current meter with an integrated flow computer or variable area meter is used as the flow transmitter (26).

9. Method according to claim 1, **characterized in that** a fuel cell unit and/or UPS source and/or an emergency power unit and/or a landline connection is used as the internal/external power source (49).

10. Method according to claim 8, **characterized in that** the fuel cell unit is operated with previously generated clean hydrogen gas (D) stored in a buffer (50) until the regeneration is complete.

11. Method according to claim 9, **characterized in that** the fuel cell unit is operated with hydrogen from a separate hydrogen storage until the regeneration is complete.

12. Method according to claim 1, **characterized in that** silica gel, molecular sieves or aluminum oxide gel is used as the adsorbent.

13. Device for drying and purifying hydrogen-containing gases that arise during electrolytic water splitting with electric current in the form of an oxygen-rich Gas (A) and a hydrogen-rich gas (B), which contain residues of the other gas, with an electrical power line (57), which is connected to the feed line (19), for supplying all consumers of the device with electricity, a discharge pipe (2) for the oxygen-rich gas (A) into the atmosphere or to a consumer and a feed pipe (3) for the hydrogen-rich gas (B), with a heater (4) for heating the hydrogen-rich gas (B), a reactor (5) for converting residual oxygen and hydrogen with formation of water on a catalyst to form a hot process gas (C), at least two Adsorbers (9,10) filled with adsorbent, which are arranged switchable under excess pressure into the adsorption and regeneration phase or vice versa by the control unit (15) via connecting pipes (31,32;37,38) and switching valves (33,34,35,36;39,40,41,42) and to form two independent circuits (AK, RK), wherein the adsorbers (9,10) are connected to the reactor (5) via a process gas pipe (18) which carries the process gas (C) into the adsorber (9,10) for adsorption of the water, and the adsorber (9,10) are connected to the consumer via a filter (11) and a top-side clean gas pipe (25) that can be shut off with a switching valve (58) for discharging the dried process gas as high-purity clean gas (D), and the adsorbers (9,10) are connected at the top with a regeneration gas pipe (24) branching off from the clean gas pipe (25) downstream the filter (11) for taking a partial quantity (TR) of the clean gas (D) as regeneration gas (E) into a regeneration gas heater and at the bottom with a desorption gas pipe (30) for discharging the desorption gas (F) loaded with water against the direction of flow of the process gas (C) of the adsorber (9,10) switched to adsorption, **characterized in that** gas pipe (24) is divided into a main pipe (3a) for feeding a main quantity (HM) of hydrogen-rich gas (B) into the reactor (5) and into a secondary pipe (3b), which branches off from a branch pipe (16) for a partial quantity (TS) of oxygen-rich gas (A), for feeding a secondary quantity (TL) of hydrogen-rich gas (B) that is enriched with the partial quantity of hydrogen-rich gas (B) into a secondary reactor (5a) for generating a hydrogen-rich carrier gas (C1), with a gas-gas-exchanger (13) being provided as a regeneration gas heater in the regeneration gas pipe (24), to which a heat accumulator (14) is assigned, which is supplied by the heat of reaction from the reaction between oxygen and hydrogen in the secondary quantity (TL) of hydrogen-rich gas (B) which is enriched with the partial quantity (TS) of oxygen-rich gas (A) and the heat carrier gas (C1) leaving the secondary reactor (5a) is heated in the heat accumulator (14) to a temperature above the regeneration temperature, and that a gas-booster (12) with frequency converter is connected to the regeneration gas pipe (24) in the flow direction upstream of the gas-gas heat exchanger (13) for suction the partial quantity (TR) of the clean gas (D) and the gas-booster (12) is connected to a flow emitter (26) with an integrated flow computer for determining a current speed value of the gas-booster (12) as an actual value or a speed value as a fixed value for the volume flow of the regeneration gas, wherein the flow emitter (26) with frequency converter is connected to the control unit (15), which, if the power supply fails, triggers by a switching device (43) a switchover of all electrical power consumer units such as gas-booster (12), control unit (15), switching valves (33 to 36; 39 to 42; 46; 52; 58), control valves (17,27) and if necessary the pump (8), to an internal/external power source (49) for temporary electrical energy supply via the power line, wherein until the end of the regeneration the gas-booster (12) maintains a suction flow circulation of the residual gas (G) that is present in the adsorbers (9,10) when the device is switched off for forming clean and desorption gas (D,F), on an inner internal flow path (K) that passes through the gas pipes (25,24,37, 32,45,3b,22,23,3a,18,31,38,25), the adsorbers (10,9), the secondary reactor (5a)/ heat accumulator (14), the gas-gas heat exchanger (13) the reactor (5), the heat exchanger (6), separator (7) and filter (11).

14. Device according to claim 13, **characterized in that** the secondary reactor (5a) and the heat accumulator (14) form a common or separate structural unit, the secondary reactor (5a) is designed for the secondary quantity (TL) of the hydrogen-rich gas (B) and the partial quantity (TS) of the oxygen-rich gas (A), and the heat accumulator (14) comprises a bulk made of Duranit balls arranged downstream of the secondary reactor (5a) for storing the heat of reaction.

15. Device according to claim 13 or 14, **characterized in that** the discharge pipe (2) for the oxygen-rich gas (A) is connected to the branch pipe (16) which leads into the secondary pipe (3a) for diverting the partial quantity (TS) of this gas before entering the secondary reactor (5a) for the hydrogen-rich gas (B), with an advance pipe (22) to the gas-gas heat exchanger (13) with a temperature sensor (20) for measuring an actual temperature of the heat carrier gas (C1) and the branch pipe (16) for the oxygen-rich gas (A) is provided with a temperature-controlled control valve (17), which determines the partial quantity (TS) of oxygen-rich gas (A) in the secondary quantity (TL) of the other gas (B) as a function of the determined actual temperature to a target temperature, that corresponds to an optimal amount of heat for heating the heat carrier gas (C1).

16. Device according to claim 13, **characterized in that** from the feed pipe (3) branches off the main pipe (3a) for feeding the main quantity (HM) of preheated hydrogen-rich gas (A) and the secondary pipe (3b) for feeding the secondary quantity (TL) of the hydrogen-rich gas (B) enriched with partial quantity (TS) of oxygen-rich gas (A) into the secondary reactor (5a) assigned to the heat accumulator (14) for generating the hydrogen-rich heat carrier gas (C1), wherein the heat accumulator (14) is connected to the gas-gas exchanger (13) via the advanced pipe (22), and a return pipe (23) leads back from the gas-gas heat exchanger (13) into the main pipe (3a), and the regeneration gas pipe (24) is provided with a temperature sensor (28) for measuring the actual temperature of the regeneration gas (E), and the main pipe (3a) has a temperature controlled regulating valve (27) in flow direction upstream of the return pipe (23) which determines the temperature of the main quantity (HM) of the hydrogen-rich gas (B) as a function of the determined actual temperature by the temperature sensor (28) to a target temperature which corresponds to a sufficient amount of heat for heating the regeneration gas to the desorption temperature.

17. Device according to claim 13, **characterized in that** the gas-booster (12) is a dry-running, hermetically sealed peripheral impeller pump with a magnetically coupled drive or a dry-running rotary vane compressor or a rotary piston compressor.

18. Device according to claim 13, **characterized in that** the flow emitter (26) is an eddy current meter with an integrated flow computer or variable area meter.

19. Device according to claim 13, **characterized in that** the internal/external power source (49) is a fuel cell unit and/or UPS source and/or an emergency power unit and/or a landline connection.

20. Device according to claim 13 or 19, **characterized in that** a buffer (50) is provided for storing previously generated clean gas (D) wherein the buffer is connected on the one hand to a branch pipe (51) that can be brought into the open and closed position via switching valve (52), and on the other hand to the fuel cell unit (49), which is connected to a feed pipe (54) that can be opened and closed by a switching valve (55), for feeding the stored clean gas (D) into the fuel cell unit (49).

21. Device according to claim 19, **characterized in that** a separate hydrogen storage device is provided and connected to the fuel cell unit (49) via the feed pipe (54) which is brought into the open or closed position by the switching valve (55) for feeding the hydrogen into the fuel cell unit.

22. Device according to claim 13, **characterized in that** the fuel cell unit (49) has an internal control element (54) which is connected to the control unit (15) and to a switching device (43) that disconnects or connect the fuel cell unit nit (49) from the feed line (19) of the power supply.

23. Device according to claim 13, **characterized in that** the gas-booster (12) and, if necessary, the pump)8) are electrically connected to the fuel cell unit (49) via an inverter (56).

24. Device according to claim 13, **characterized in that** the inner flow path (K) is formed by the main pipe (3a) closed by the regulating valve (27) if the power fails, the branch pipe (16) closed by the second control valve (17), the desorption gas pipe (30) closed by the switching valve (47), from the process gas pipe (18) via the heat exchanger (6), the separator (7) and the adsorber (9) switched to adsorption by the switching valve (33 to 36), a section of the clean gas pipe (25) which is closed by switching valve (59) to the consumer but kept open to the regeneration gas pipe, the regeneration gas pipe (24) via the adsorber (10) switched to regeneration by the switching valves (39 to 42), a section of the desorption gas pipe (30), the feed pipe (45) via secondary pipe (3b) to the secondary reactor (5a) and heat accumulator (14), the advance pipe (22), the gas-gas heat exchanger (13), the return pipe (23) that connects to the main pipe (3a) via the reactor (5) back to the process gas pipe (18).

25. Device according to claim 13, **characterized in that** a heat exchanger (6) for cooling the process gas (C)/desorption gas (F) and a separator (7) for separating the condensed water are integrated behind each other in the process gas pipe (18), the separator (7) being connected to a pump (8) for conveying the condensed water into the electrolyzer (1) or into a storage.

26. Device according to claim 13, **characterized in that** the desorption gas pipe (30) is connected into the process gas pipe (18) in the flow direction of the process gas (C) downstream of the reactor (5).

27. Device according to claim 13, **characterized in that** the gas-booster (12), the pump (8), the regulating valves (17,27), the switching valves (33 to 36, 39 to 42, 46, 47, 52, 56, 58) and the control unit (15) are connected to the internal/external power supply (49), for example a fuel cell unit and/or UPS source and/or emergency power unit or a landline connection for supplying electricity.

28. Device according to claim 13, **characterized in that** the adsorbers (9,10) are filled with silica gel, molecular sieves or aluminum oxide gel as an adsorbent for water.

## Revendications

1. Procédé destiné au séchage et à la purification de gaz qui contiennent de l'hydrogène, que l'on obtient, lors de la séparation de l'eau par voie électrolytique avec du courant électrique, sous la forme d'un gaz riche en oxygène (A) et d'un gaz riche en hydrogène (B) qui contiennent des résidus de l'autre gaz respectif, dans lequel : on évacue dans l'atmosphère ou on livre à un consommateur le gaz riche en oxygène (A) ; on chauffe le gaz riche en hydrogène (B) dans un dispositif de chauffage (4) et on le soumet dans un réacteur (5) à une réaction exothermique dans laquelle on transforme l'oxygène résiduel avec l'hydrogène, avec formation d'eau, en un gaz de processus humide et chaud (C) ; on élimine ensuite l'eau de ce gaz de processus (C) dans des conditions de surpression par adsorption de l'eau contre un agent d'adsorption dans un adsorbeur qui fait partie d'au moins deux adsorbeurs (9, 10) reliés par l'intermédiaire de conduits de raccordement (31, 32 ; 37, 38) et de vannes de commutation (33, 34, 35, 36 ; 39, 40, 41, 42) jusqu'à ce que l'agent d'adsorption dans l'adsorbeur respectif (9, 10) soit chargé avec de l'eau ; dans lequel on dégage au profit du consommateur le gaz de processus séché (C), une fois que ce dernier a quitté l'adsorbeur respectif (9, 10), par l'intermédiaire d'un filtre (11), sous la forme d'un gaz épuré contenant de l'hydrogène (D), qui manifeste une pureté élevée, dans un conduit (25) destiné à un gaz épuré ; et on dévie le gaz de processus qui n'a pas fait l'objet du traitement pour la poursuite du processus de charge sur l'adsorbeur non chargé (9, 10) ; et on régénère de manière simultanée l'agent d'adsorption chargé de l'adsorbeur respectif (9, 10) avec une quantité partielle (T_{R}) de gaz épuré (D), sous la forme d'un gaz de régénération (E), qui a été chauffée à la température de désorption, acheminée à l'encontre de la direction de courant de l'adsorbeur (9 ou 10) que l'on a placé dans la phase de charge, dans un conduit (18) destiné au gaz de régénération ; dans lequel une unité de commande (15) place par commutation les adsorbeurs (9, 10), en fonction de la charge de l'agent d'adsorption, dans la phase d'adsorption et dans la phase de régénération ou inversement, et tous les consommateurs électriques sont alimentés, par l'intermédiaire d'un conduit destiné au courant, à partir de l'alimentation en courant électrique adjacente, **caractérisé en ce que** le gaz riche en hydrogène (B) qui doit être séché et qui doit être purifié est réparti en une quantité principale (H_{M}) qui est acheminée au réacteur (5) pour l'obtention du gaz de processus (C) et en une quantité secondaire (T_{L}) destinée à fournir un gaz caloporteur (C1) riche en hydrogène, dans un réacteur secondaire (5a) ; dans lequel on introduit dans la quantité secondaire (T_{L}) une quantité partielle (T_{S}) du gaz riche en oxygène (A) qui a été déviée, avant l'entrée dans le réacteur secondaire (5a) ; on accumule la chaleur réactionnelle qui en résulte dans un accumulateur de chaleur (14) ; et on chauffe le gaz caloporteur (C1) dans l'accumulateur de chaleur (14) au moins à une température supérieure à la température de régénération ; on l'achemine ensuite à un échangeur de chaleur (13) de type gaz-gaz à des fins de réchauffement du gaz de régénération (E) ; et, après l'échange de chaleur, on la recycle dans la quantité principale (H_{M}) ; et **en ce qu'**un renforçateur de gaz (12), raccordé au conduit (25) destiné au gaz de régénération, équipé d'un convertisseur de fréquence, aspire la quantité partielle (T_{R}) du gaz épuré (D) sous la forme du gaz de régénération (E) ; et un transmetteur du débit (26), auquel est intégré un calculateur du débit, règle le débit volumique de la quantité partielle (T_{R}), en se basant sur une détermination d'une valeur de la vitesse de rotation en vigueur du renforçateur de gaz (12), à titre de valeur réelle, ou d'une valeur de la vitesse de rotation, à titre de valeur fixe, par l'intermédiaire de l'unité de commande (15) qui, dans le cas d'une coupure de l'alimentation en courant, déclenche une commutation de tous les agrégats consommateurs de courant, tels que le renforçateur de gaz (12), l'unité de commande (15), les vannes de commutation (33 à 36 ; 39 à 42 ; 46 ; 47 ; 52 ; 55 ; 58), les vannes de réglage (17, 27) et, le cas échéant, la pompe (8), à une source de courant interne/externe (49) à des fins d'alimentation temporaire en énergie électrique, par l'intermédiaire du conduit (57) destiné au courant, en utilisant un mécanisme de commutation (43) ; dans lequel le renforçateur de gaz (12) génère un circuit de courant d'aspiration du gaz épuré et de désorption (D, F), présent lors de la coupure de l'alimentation en courant, que l'on obtient à partir du gaz résiduel (G) aux adsorbeurs (9, 10), jusqu'au terme réglementaire de la régénération, sur une voie d'écoulement interne (K) qui s'étend à travers les conduits destinés aux gaz (25, 24, 37, 32, 45, 3b, 22, 23, 3a, 18, 31, 38, 25), les adsorbeurs (9, 10), le renforçateur de gaz (12), l'échangeur de chaleur (13) du type gaz-gaz, le réacteur secondaire (5a)/l'accumulateur de chaleur (14), le réacteur (5), l'échangeur de chaleur (6), le séparateur (7) et le filtre (11) ; dans lequel on chauffe, dans l'accumulateur de chaleur (14), le gaz de désorption (F) qui quitte l'adsorbeur (9, 10) qui a été placé par commutation dans la phase de régénération, par l'intermédiaire du réacteur secondaire (5a) ; on l'achemine à l'échangeur de chaleur (13) du type gaz-gaz, sous la forme d'un gaz caloporteur, à des fins de réchauffement du gaz de régénération (E), à la température de désorption ; et on le recycle ensuite dans le gaz riche en hydrogène avant l'entrée dans le réacteur (5).

2. Procédé selon la revendication 1, **caractérisé par** les étapes suivantes dans lesquelles :
a) on répartit le gaz riche en hydrogène (B) de manière telle que l'on obtient la quantité principale (H_{M}) que l'on achemine au réacteur (5) à des fins de génération du gaz de processus (C), par l'intermédiaire d'un conduit principal (3a), et une quantité secondaire (T_{L}) que l'on achemine au réacteur secondaire (5a) à des fins de génération d'un gaz caloporteur (C1) riche en hydrogène, par l'intermédiaire d'un conduit secondaire (3b) ;
b) on dévie la quantité partielle (T_{S}) du gaz riche en oxygène (A) et on introduit cette quantité partielle dans la quantité secondaire (T_{L}) conformément à l'étape a) avant l'entrée dans le réacteur secondaire (5a) ;
c) on règle la température du gaz caloporteur (C1) par l'intermédiaire d'un réglage de l'introduction de la quantité partielle (T_{S}) du gaz riche en oxygène (A) dans la quantité partielle (T_{L}) du gaz riche en hydrogène (B) ;
d) on introduit la quantité secondaire (T_{L}) du gaz riche en hydrogène (B) et la quantité partielle (T_{S}) du gaz riche en oxygène (A) dans le réacteur secondaire (5a) à des fins de génération du gaz caloporteur (C1) ; on accumule la chaleur réactionnelle dans l'accumulateur de chaleur (14) ; et on chauffe le gaz caloporteur (C1) à une température qui est supérieure à la température de régénération ;
e) on achemine le gaz caloporteur (C1) qui a été chauffé par l'intermédiaire d'un conduit aller (22) dans l'échangeur de chaleur (13) du type gaz-gaz dans le but de mettre en œuvre un échange de chaleur du type gaz-gaz à des fins de réchauffement du gaz de régénération à la température de désorption et on recycle le gaz caloporteur (C1) désaccouplé de la chaleur par l'intermédiaire d'un conduit de retour (23) dans le conduit principal (3a) qui guide la quantité principale (H_{M}) du gaz riche en hydrogène (B) ;
f) on règle la température du gaz de régénération (E) par l'intermédiaire d'un réglage de l'alimentation de la quantité secondaire (T_{L}) conformément à l'étape a) dans le réacteur secondaire (5a) et dans l'accumulateur de chaleur (14) dans le but de chauffer le gaz de régénération (E) à la température de désorption ;
g) on refroidit le gaz de processus chaud (C), on extrait l'eau qui s'est séparée par condensation lors du refroidissement et on évacue l'eau par pompage dans le conduit de transport (29) de l'électrolyseur (1) ou dans un réservoir séparé ou dans des réservoirs intermédiaires de l'eau dans le dispositif de séparation (7), l'eau étant évacuée par la suite ;
h) on dévie la quantité partielle (T_{R}) de gaz épuré (D) sous la forme du gaz de régénération (E) et on règle cette quantité partielle par l'intermédiaire d'un réglage du débit volumique du gaz de régénération (E) dans l'adsorbeur (9 ou 10) ;
m) on introduit le gaz de régénération chauffé (E) après l'étape f) dans l'adsorbeur (9, 10) qui a été placé par commutation dans la phase de régénération, à des fins de désorption de l'eau adsorbée par l'intermédiaire de l'agent d'adsorption ; et
n) on recycle le gaz de désorption chargé (F) dans le gaz de processus chaud (C) avant le refroidissement conformément à l'étape g) ou dans le gaz riche en hydrogène (B) avant l'entrée dans le réacteur secondaire (5a).

3. Procédé selon la revendication 1 ou 2, **caractérisé en ce qu'**on ajuste, à une température de consigne, la quantité partielle (T_{S}) du gaz riche en oxygène (A), en fonction d'une température réelle du gaz caloporteur (C1), qui est mesurée à l'aide d'un capteur de la température (20) dans le conduit aller (22), par l'intermédiaire d'une vanne de réglage (17) qui est mise en communication avec l'unité de commande (15), dans un conduit de déviation (16), ladite température de consigne correspondant à une quantité de chaleur optimale pour le chauffage du gaz de régénération (E) par l'intermédiaire du gaz caloporteur (C1).

4. Procédé selon la revendication 1, **caractérisé en ce que** l'on ajuste, à une température de consigne qui correspond à la température de désorption, la température du gaz de régénération (E) en fonction d'une température réelle qui est mesurée par un capteur de la température (28) dans le conduit (24) destiné au gaz de régénération, dans la direction du courant, derrière l'échangeur de chaleur (13) du type gaz-gaz, par l'intermédiaire d'une vanne de réglage (27) qui est mise en communication avec l'unité de commande (15), ladite température de consigne correspondant à une quantité de chaleur suffisante pour le chauffage du gaz de régénération à la température de désorption.

5. Procédé selon la revendication 1, **caractérisé en ce que** l'on obtient la voie d'écoulement interne (K) par le fait :
a) d'obturer le conduit (25) destiné au gaz épuré, avec la vanne de commutation (58) dans la direction du consommateur et de fermer le conduit principal (3a) avec la vanne de réglage (27), le conduit de déviation (16) avec la vanne de réglage (17) et le conduit (30) destiné au gaz de désorption avec la vanne de commutation (47) ; et
b) de laisser ouvert le conduit (25) destiné au gaz épuré dans la direction du conduit (24) destiné au gaz de régénération, l'adsorbeur (10, 9) qui a été placé dans la phase de régénération par commutation en utilisant les vannes de commutation (39, 40, 41, 42) par l'intermédiaire des conduits de raccordement (37, 38), le conduit d'alimentation (45) qui s'étend à travers le conduit de raccordement (32), le conduit secondaire (3b), par l'intermédiaire du réacteur secondaire (5a)/de l'accumulateur de chaleur (14), le conduit aller (22) par l'intermédiaire de l'échangeur de chaleur (13) du type gaz-gaz, le conduit de retour (23), le conduit principal (3a) par l'intermédiaire du réacteur (5), le conduit (18) destiné au gaz de processus par l'intermédiaire de l'échangeur de chaleur (6) et le séparateur (7), ainsi que l'adsorbeur (9, 10) qui a été placé par commutation dans la phase d'adsorption en utilisant les vannes de commutation (33, 34, 35, 36) en passant par les conduits de raccordement (31, 32), qui guide en passant par le conduit (25) destiné au gaz épuré, en retour dans le conduit (24) destiné au gaz de régénération.

6. Procédé selon la revendication 1, **caractérisé en ce que**, après la coupure de l'alimentation en courant, on met la quantité restante de gaz résiduel (G) en circuit en passant par les adsorbeurs (9 ou 10) jusqu'à ce que la régénération soit terminée ; dans lequel le mode de mise en circuit comprend les étapes suivantes dans lesquelles :
I on déclenche l'alimentation en courant par l'intermédiaire de la source de courant interne/externe (49), par exemple d'une unité de piles à combustible, et on poursuit la mise en activité des consommateurs électriques tels que le renforçateur de gaz (12), les vannes de commutation et de réglage (33 à 36, 39 à 42, 46, 47, 52, 55 et 58), l'unité de commande (15) et, le cas échéant, la pompe (8) ;
II on ferme le conduit (25) destiné au gaz épuré dans la direction du consommateur à l'intervention de la vanne de commutation (58) et on forme la voie d'écoulement interne ;
III on poursuit le séchage/la régénération par l'intermédiaire du transport des gaz épurés et de désorption (D et F) généré par les adsorbeurs (9 ou 10) à partir du gaz résiduel restant (G), avec le renforçateur de gaz (12) dans le circuit de courant d'aspiration en passant par la voie d'écoulement (K) ; dans lequel on fait circuler dans le circuit le gaz épuré/de désorption (D/F) jusqu'au terme de la régénération et, lors du passage par l'accumulateur de chaleur (14), on chauffe à une température qui est supérieure à la température de régénération ;
IV on dévie une quantité partielle (T_{R}) de gaz à partir du conduit (25) destiné au gaz épuré, sous la forme du gaz de régénération (E) et on règle cette quantité partielle par la mesure de son débit volumique ; on détermine une valeur de vitesse de rotation en vigueur du renforçateur de gaz (12) à titre de valeur réelle ou une valeur de vitesse de rotation à titre de valeur fixe à partir du débit volumique qui a été mesuré, avec le calculateur du débit qui est intégré dans le transmetteur du débit (26) ; on transmet la valeur qui a été déterminée à l'unité de commande (15) qui spécifie cette valeur, comme étant une valeur de commande, au convertisseur de fréquence ;
V on chauffe la quantité de gaz de régénération (E) par l'intermédiaire du gaz caloporteur (C1) qui a été chauffé dans l'accumulateur de chaleur (14), à la température de désorption dans l'échangeur de chaleur (13) du type gaz-gaz ;
VI on introduit le gaz de régénération (E) qui a été chauffé dans l'adsorbeur (9 ou 10) qui a été placé d'une manière respective dans la phase de régénération par commutation, à des fins de désorption de l'eau adsorbée par l'agent d'adsorption ; et on recycle le gaz de désorption chargé (F) par l'intermédiaire de la vanne de commutation ouverte (46) dans le conduit secondaire (3b) avant le réacteur secondaire (5a) ;
VII on chauffe le gaz de désorption (F) qui a été recyclé, dans l'accumulateur de chaleur (14) ; on achemine le gaz de désorption (F) qui a été chauffé, sous la forme d'un gaz caloporteur (C1) à l'échangeur de chaleur (13) du type gaz-gaz ; et on recycle le gaz (C1) à partir de l'échangeur de chaleur (13) du type gaz-gaz en passant par le conduit de retour (23) dans la direction de courant de la quantité principale (Hₘ) après la vanne de réglage (27) dans le conduit principal (3a) dans la direction du réacteur (5) ;
VIII on refroidit la quantité recyclée de gaz dans l'échangeur de chaleur (6) incorporé dans le conduit (18) destiné au gaz de processus, dans la direction de courant du gaz ; on se débarrasse de l'eau qui s'est séparée par condensation dans le séparateur (7) ; et on évacue l'eau par pompage dans le conduit de transport (29) dans la direction de l'électrolyseur (1) ou dans un réservoir séparé ou dans des réservoirs intermédiaires de l'eau dans le séparateur (7), l'eau étant évacuée par la suite ;
IX on achemine la quantité de gaz qui quitte le séparateur (7) à des fins d'adsorption de l'eau encore présente dans l'adsorbeur (9 ou 10) qui a été placé dans la phase d'adsorption par commutation ; et on prélève à nouveau la quantité de gaz de régénération à partir du gaz épuré (D) après le filtre (11) à l'intervention du renforçateur de gaz (12) ; et
X on poursuit les étapes I à IX jusqu'à ce que la régénération arrive à son terme.

7. Procédé selon la revendication 1, **caractérisé en ce que**, pour faire office de renforçateur de gaz (12), on met en œuvre une pompe du type à accélération périphérique, qui travaille par voie sèche et dans des conditions d'étanchéité hermétique, comprenant un moteur couplé à un aimant ou bien un compresseur du type à tiroir rotatif travaillant par voie sèche ou encore un compresseur du type à piston rotatif.

8. Procédé selon la revendication 1, **caractérisé en ce que**, pour faire office de transmetteur du débit (26), on utilise un dispositif de mesure du type à courant de Foucault dans lequel est intégré un calculateur du débit ou un dispositif de mesure du type rotamètre.

9. Procédé selon la revendication 1, **caractérisé en ce que**, pour faire office de source de courant interne/externe (49), on utilise une unité de piles à combustible et/ou une source de courant ininterruptible et/ou un agrégat d'alimentation de secours et/ou un raccordement à une ligne fixe.

10. Procédé selon la revendication 8, **caractérisé en ce que** l'unité de piles à combustible est mise en action jusqu'au terme de la régénération avec un gaz épuré (D) contenant de l'hydrogène, que l'on a obtenu au préalable, mis en réserve dans un tampon (50).

11. Procédé selon la revendication 9, **caractérisé en ce que** l'unité de piles à combustible est mise en action jusqu'au terme de la régénération avec de l'hydrogène qui provient d'une mise en réserve d'hydrogène séparée.

12. Procédé selon la revendication 1, **caractérisé en ce que**, pour faire office de l'agent d'adsorption, on utilise du gel de silice, un tamis moléculaire ou un gel à base d'oxyde d'aluminium.

13. Dispositif destiné au séchage et à la purification de gaz qui contiennent de l'hydrogène, que l'on obtient, lors de la séparation de l'eau par voie électrolytique, sous la forme d'un gaz riche en oxygène (A) et d'un gaz riche en hydrogène (B) qui contiennent des résidus de l'autre gaz respectivement séparé, qui comprend : un conduit (57) destiné au courant qui est raccordé au conduit d'alimentation (19) à des fins d'alimentation de tous les consommateurs du dispositif avec du courant ; un conduit d'évacuation (2) pour le gaz riche en oxygène (A) dans l'atmosphère ou au profit du consommateur ; et un conduit d'alimentation (3) pour le gaz riche en hydrogène (B) ; un dispositif de chauffage (4) qui destiné à chauffer le gaz riche en hydrogène (B) ; un réacteur (5) qui est destiné à la mise en réaction de l'oxygène résiduel et de l'hydrogène avec formation d'eau dans un catalyseur afin d'obtenir un gaz de processus chaud (C) ; au moins deux adsorbeurs (9, 10) contenant une matière de remplissage faisant office d'agent d'adsorption, qui sont disposés de manière à pouvoir être placés par commutation, par l'intermédiaire de conduits de raccordement (31, 32 ; 37, 38) et de vannes de commutation (33, 34, 35, 36 ; 39, 40, 41, 42) dans des conditions de surpression dans un état d'adsorption et dans un état de régénération et inversement par l'intermédiaire d'une unité de commande (15), et qui forment deux circuits d'adsorption (AK, RK) indépendants l'un de l'autre ; dans lequel les adsorbeurs (9, 10) sont mis en liaison avec le réacteur (5) par l'intermédiaire d'un conduit (18) destiné au gaz de processus, le conduit en question introduisant le gaz de processus (C) à des fins d'adsorption de l'eau dans les adsorbeurs (9, 10), et les adsorbeurs (9, 10) étant reliés par l'intermédiaire d'un filtre (11) et d'un conduit (25), côté tête, destiné au gaz épuré, qui peut être obturé avec une vanne de commutation (58), à des fins de livraison au consommateur du gaz de processus qui a été séché, sous la forme d'un gaz épuré (D), qui manifeste une pureté élevée, et les adsorbeurs (9, 10) sont reliés, côté tête, à un conduit (24) destiné au gaz de régénération, qui est prévu pour une déviation par rapport au conduit (25) destiné au gaz épuré, après le filtre (11), à des fins d'extraction d'une quantité partielle (T_{R}) du gaz épuré (D), sous la forme d'un gaz de régénération (E) dans un dispositif de chauffage du gaz de régénération et, côté pied, à un conduit (30) destiné au gaz de désorption à des fins d'évacuation du gaz de désorption (F) qui a été chargé avec de l'eau, à l'encontre de la direction de courant du gaz de processus (C) de l'adsorbeur (9, 10) qui a été placé par commutation dans la phase d'adsorption, **caractérisé en ce que** le conduit d'alimentation (3) a été réparti en un conduit principal (3a) destiné à acheminer une quantité principale (H_{M}) du gaz riche en hydrogène (B) dans le réacteur (5) et en un conduit secondaire (3b) qui doit venir s'intégrer à partir d'un conduit de déviation (16) pour une quantité partielle (T_{S}) du gaz riche en oxygène (A), à des fins d'alimentation d'une quantité secondaire (T_{L}) du gaz riche en hydrogène (B), enrichie avec la quantité partielle (T_{S}) du gaz riche en oxygène (A), dans un réacteur secondaire (5a) à des fins de génération d'un gaz caloporteur (C1) riche en hydrogène ; dans lequel, dans le conduit (24) destiné au gaz de régénération, on prévoit, à titre de dispositif de chauffage du gaz de régénération, un échangeur de chaleur (13) du type gaz-gaz auquel est attribué un accumulateur de chaleur (14) qui est alimenté par la chaleur réactionnelle qui émane de la mise en réaction de l'oxygène et de l'hydrogène dans le réacteur secondaire (5a) à partir de la quantité secondaire (T_{L}) du gaz riche en hydrogène (B), enrichie avec la quantité partielle (T_{S}) du gaz riche en oxygène (A), et qui chauffe le gaz caloporteur (C1) qui quitte le réacteur secondaire (5a), dans l'accumulateur de chaleur (14) à une température qui est supérieure à la température de régénération ; et **en ce que**, viennent se raccorder au conduit (24) destiné au gaz de régénération, dans la direction du courant, avant l'échangeur de chaleur (13) du type gaz-gaz, un renforçateur de gaz (12) qui comprend un convertisseur de fréquence à des fins d'aspiration de la quantité partielle (T_{R}) du gaz épuré (D) et un transmetteur du débit (26) auquel est intégré un calculateur du débit à des fins de détermination d'une valeur de vitesse de rotation en vigueur du renforçateur de gaz (12) à titre de valeur réelle ou d'une valeur de vitesse de rotation à titre de valeur fixe pour le débit volumique du gaz de régénération ; dans lequel le transmetteur du débit (26) est mis en liaison avec le convertisseur de fréquence et avec l'unité de commande (15) qui, dans le cas d'une coupure de l'alimentation en courant, déclenche une commutation de tous les agrégats consommateurs de courant, tels que le renforçateur de gaz (12), l'unité de commande (15), les vannes de commutation (33 à 36 ; 39 à 42 ; 46 ; 47 ; 52 ; 55 ; 58), les vannes de réglage (17, 27) et, le cas échéant, la pompe (8), à une source de courant interne/externe (49) à des fins d'alimentation temporaire en énergie électrique, par l'intermédiaire du conduit destiné au courant qui comprend un mécanisme de commutation (43) ; dans lequel le renforçateur de gaz (12) maintient, jusqu'au terme réglementaire de la régénération, un circuit de courant d'aspiration du gaz épuré et de désorption (D, F), présent dans le dispositif lors de la coupure de l'alimentation en courant, que l'on obtient à partir du gaz résiduel (G) aux adsorbeurs (9, 10), sur une voie d'écoulement interne (K) formée par les conduits destinés aux gaz (25, 24, 37, 32, 45, 3b, 22, 23, 3a, 18, 31, 38, 25), les adsorbeurs (10, 9), le réacteur secondaire (5a)/l'accumulateur de chaleur (14), l'échangeur de chaleur (13) du type gaz-gaz, le réacteur (5), l'échangeur de chaleur (6), le séparateur (7) et le filtre (11).

14. Dispositif selon la revendication 13, **caractérisé en ce que** le réacteur secondaire (5a) et l'accumulateur de chaleur (14) forment une unité structurelle commune ou des unités structurelles séparées ; dans lequel le réacteur secondaire (5a) est dimensionné pour la quantité secondaire (T_{L}) du gaz riche en hydrogène (B) et pour la quantité partielle (T_{S}) du gaz riche en oxygène (B) et l'accumulateur de chaleur (14) comprend une matière de remplissage disposée après le réacteur secondaire (5a), constituée par des billes de Duranite® à des fins d'accumulation de la chaleur réactionnelle.

15. Dispositif selon la revendication 13 ou 14, **caractérisé en ce que** le conduit d'évacuation (2) pour le gaz riche en oxygène (A) est relié au conduit de déviation (16) qui débouche, à des fins de déviation de la quantité partielle (T_{S}) de ce gaz, dans le conduit secondaire (3b) destiné au gaz riche en hydrogène (B), avant l'entrée dans le réacteur secondaire (5a) ; dans lequel un conduit aller (22) qui mène à l'échangeur de chaleur (13) du type gaz-gaz est muni d'un capteur de la température (20) destiné à la mesure d'une température réelle du gaz caloporteur (C1) et le conduit de déviation (16) destiné au gaz riche en oxygène (A) est muni d'une vanne de réglage (17) commandée par la température, vanne qui détermine la quantité partielle (T_{S}) du gaz riche en oxygène (A), dans la quantité secondaire (T_{L}) de l'autre gaz (B), en se basant sur une température de consigne qui correspond à une quantité de chaleur optimale pour le chauffage du gaz caloporteur (C1), en fonction de la température réelle qui a été déterminée.

16. Dispositif selon la revendication 13, **caractérisé en ce que**, à partir du conduit d'alimentation (3), dérivent le conduit principal (3a) destiné à introduire la quantité principale (H_{M}) du gaz riche en hydrogène (B), soumis à un chauffage préalable, dans le réacteur (5) à des fins de génération du gaz de processus (C) et le conduit secondaire (3b) destiné à introduire la quantité secondaire (T_{L}) du gaz riche en hydrogène (B), soumis à un chauffage préalable, qui a été enrichie avec la quantité partielle (T_{S}) du gaz riche en oxygène (A), dans le réacteur secondaire (5a) attribué à l'accumulateur de chaleur (14) à des fins de génération du gaz caloporteur (C1) riche en hydrogène ; dans lequel l'accumulateur de chaleur (14) est relié à l'échangeur de chaleur (13) du type gaz-gaz par l'intermédiaire du conduit aller (22) ; un conduit de retour (23) opère un recyclage à partir de l'échangeur de chaleur (13) du type gaz-gaz dans le conduit principal (3a) ; le conduit (24) destiné au gaz de régénération est muni d'un capteur de la température (28) destiné à la mesure de la température réelle du gaz de régénération (E) ; le conduit principal (3a) présente, dans la direction du courant, avant le conduit de retour (23), une vanne de réglage (27) commandée par la température qui détermine la température de la quantité principale (H_{M}) du gaz riche en hydrogène (B) en fonction d'une température réelle déterminée par le capteur de la température (28), en se basant sur une température de consigne qui correspond à une quantité de chaleur suffisante pour le chauffage du gaz de régénération à la température de désorption.

17. Dispositif selon la revendication 13, **caractérisé en ce que** le renforçateur de gaz (12) représente une pompe du type à accélération périphérique, qui travaille par voie sèche et dans des conditions d'étanchéité hermétique, comprenant un moteur couplé à un aimant, un compresseur du type à tiroir rotatif ou un compresseur du type à piston rotatif.

18. Dispositif selon la revendication 13, **caractérisé en ce que** le transmetteur du débit (26) représente un dispositif de mesure du type à courant de Foucault dans lequel est intégré un calculateur du débit ou un dispositif de mesure du type rotamètre.

19. Dispositif selon la revendication 13, **caractérisé en ce que** la source de courant interne/externe (49) représente une unité de piles à combustible et/ou une source de courant ininterruptible et/ou un agrégat d'alimentation de secours et/ou un raccordement à une ligne fixe.

20. Dispositif selon la revendication 13 ou 19, **caractérisé en ce que** l'on prévoit un tampon (50) destiné à l'accumulation de gaz épuré (D) qui a été généré antérieurement, qui d'une part est relié au conduit (25) destiné au gaz épuré par l'intermédiaire d'un conduit de déviation (51) qui amène, par le biais d'une vanne de commutation (52), dans la position d'ouverture et de fermeture, et d'autre part est mis en liaison avec l'unité de piles à combustible (49) par l'intermédiaire d'un conduit d'alimentation (54) qui s'ouvre et qui se ferme à l'intervention d'une vanne de commutation (55), à des fins d'alimentation du gaz épuré (D) qui a été accumulé, dans l'unité de piles à combustible (49).

21. Dispositif selon la revendication 19, **caractérisé en ce que** l'on prévoit un accumulateur d'hydrogène séparé qui est mis en liaison avec l'unité de piles à combustible (49) par l'intermédiaire du conduit d'alimentation (54) qui amène dans l'état d'ouverture ou de fermeture par le biais de la vanne de commutation (55), à des fins d'alimentation de l'hydrogène dans l'unité de piles à combustible (49).

22. Dispositif selon la revendication 13, **caractérisé en ce que** l'unité de piles à combustible (49) présente un organe de commande interne (53) relié à l'unité de commande (15), qui est relié à un mécanisme de commutation (43) qui sépare l'unité de piles à combustible (49) du conduit d'alimentation (19) de l'alimentation en courant (19) ou qui la relie à celui-ci.

23. Dispositif selon la revendication 13, **caractérisé en ce que** le renforçateur de gaz (12) et, le cas échéant, la pompe (8) sont reliés par voie électrique à l'intervention d'un onduleur (56) à l'unité de piles à combustible (49).

24. Dispositif selon la revendication 13, **caractérisé en ce que** la voie d'écoulement interne (K) est formée, dans le cas d'une coupure de courant, à partir du conduit principal (3a) fermé, par la vanne de réglage (27), du conduit de déviation (16) fermé par la vanne de réglage (17) et du conduit (30) destiné au gaz de désorption, fermé par la vanne de commutation (47), par le conduit (18) destiné au gaz de processus, en passant par l'échangeur de chaleur (6), par le séparateur (7) et par l'adsorbeur (9) placé dans la phase d'adsorption par l'intermédiaire des vannes de commutation (33 à 36), par un tronçon du conduit (25) destiné au gaz épuré, fermé dans la direction au profit du consommateur par une vanne de commutation (58), mais maintenu ouvert dans la direction du conduit destiné au gaz de régénération, par un tronçon du conduit (24) destiné au gaz de régénération, en passant par l'adsorbeur (10) placé dans la phase de régénération par l'intermédiaire des vannes de commutation (39 à 42), par un tronçon du conduit (30) destiné au gaz de désorption, par un tronçon du conduit d'alimentation (45) qui mène au conduit secondaire (3b) en passant par le réacteur secondaire (5a) et par l'accumulateur de chaleur (14), par un tronçon du conduit aller (22), par l'échangeur de chaleur (13) du type gaz-gaz, par un tronçon du conduit de retour (23) qui vient s'intégrer dans le conduit principal (3a), en passant par le réacteur (5), en retour dans le conduit de processus (18) .

25. Dispositif selon la revendication 13, **caractérisé en ce que**, dans le conduit destiné au gaz de processus (18), sont intégrés un échangeur de chaleur (6) destiné au refroidissement du gaz de processus (C)/du gaz de désorption (F) et un séparateur (7) destiné à la séparation de l'eau que l'on obtient par condensation, l'un derrière l'autre, dans la direction de courant du gaz de processus (C) ; dans lequel le séparateur (7) est mis en liaison, par l'intermédiaire d'une pompe (8) destinée au transport de l'eau que l'on obtient par condensation, dans l'électrolyseur (1) ou dans un accumulateur.

26. Dispositif selon la revendication 13, **caractérisé en ce que** le conduit (30) destiné au gaz de désorption est intégré dans le conduit (18) destiné au gaz de processus, dans la direction de courant du gaz de processus (C), après le réacteur (5).

27. Dispositif selon la revendication 13, **caractérisé en ce que** le renforçateur de gaz (12), la pompe (8), les vannes de réglage (17, 27), les vannes de commutation (33 à 36, 39 à 42, 46, 47, 52, 55, 58) et l'unité de commande (15) sont reliés à la source de courant interne/externe (49), par exemple à une unité de piles à combustible et/ou à une source de courant ininterruptible et/ou à un agrégat d'alimentation de secours ou à un raccordement à une ligne fixe, à des fins d'alimentation en courant.

28. Dispositif selon la revendication 13, **caractérisé en ce que** les adsorbeurs (9, 10) comprennent une matière de remplissage sous la forme de gel de silice, d'un tamis moléculaire ou d'un gel à base d'oxyde d'aluminium, pour faire office d'agent d'adsorption pour l'eau.
